# EUROPEAN PATENT SPECIFICATION

(11) **EP 2 402 858 B1**
(45) Date of publication and mention of the grant of the patent: **05.03.2014**
(21) Application number: 11171929.0
(22) Date of filing: 29.06.2011
(51) Int. Cl.: G06F 9/455, G06F 9/48, H04L 29/08, G06Q 30/02, G06F 9/44

(54) **Client Hypervisor-Based Terminal Device and Operating Method Thereof**
Client-Hypervisor-basiertes Endgerät und Betriebsverfahren dafür
Dispositif de terminal à base d'hyperviseur client et son procédé de fonctionnement

(30) Priority: 29.06.2010 KR 20100062378; 29.06.2010 KR 20100062383; 29.06.2010 KR 20100062388; 29.06.2010 KR 20100062390
(43) Date of publication of application: 04.01.2012
(73) Proprietor: Samsung SDS, Seoul (KR)
(72) Inventor: Huh, Je Min, 151-835 Seoul (KR); Lee, Won Il, 463-850 Gyeonggi-do (KR)
(74) Representative: Grünecker, Kinkeldey, Stockmair & Schwanhäusser

(56) References cited:
- EP-A2- 1 873 636
- WO-A1-2009/133669
- US-A1- 2005 081 212
- US-A1- 2005 251 806
- US-A1- 2006 005 190
- US-A1- 2006 075 402
- US-A1- 2008 243 571
- US-A1- 2009 019 442
- US-B1- 7 506 265

## Description

This application claims priority from Korean Patent Application Nos. 10-2010-0062378, 10-2010-0062383, 10-2010-0062388, and 10-2010-62390, each filed on June 29, 2010, in the Korean Intellectual Property Office.

Apparatuses and methods consistent with the exemplary embodiments relate to a client hypervisor-based terminal device and an operating method thereof.

As personal computers and mobile devices have become widespread and communication networks, such as the Internet, have been developed, online services or services using applications have been developed.

For example, there may be an advertisement service to expose users to a corresponding advertisement when they search for specific information online, an advertisement service using software, or services to expose users to a corresponding advertisement when they click a banner.

However, since these services are provided within a limited space of a two-dimensional plane, a method for providing services or measuring an effect of the services may cause the users inconvenience.

US2005/251806 relates to the enhancement of real-time operating system functionality using a hypervisor. A hypervisor performs a real time scheduling function used to support concurrent execution of an RTOS and a GPOS on a system of shared hardware resources. The RTOS or its applications can thus utilize services provided by the GPOS. As illustrated in Figure, the data processing system is implemented with a collection of shared data processing resources which include 1 or more central processing units, a shared memory, and a set of input/output facilities. A hypervisor program also known as a virtual machine monitor executes on the system to provide a virtual machine environment for various operating system instances and application programs. Each of the operating systems 14, 16, 18 and 20 respectively runs at least one application 22, 24, 26, and 28. The hypervisor provides the plural virtual machine environments 121, 122, 123, and 124 by allocating CPU bandwidth memory and input/output facilities for use within each virtual machine.

US 2009/019442 relates to a method for changing a scheduler in a virtual machine monitor. A second scheduler is loaded in a virtual machine monitor when the virtual machine monitor is running, and is then activated to handle a scheduling request for a scheduling process in place of a first scheduler, when the virtual machine monitor is running.

US 2005/081212 relates to a method and system to switch between a service virtual machine and a guest virtual machine in a virtual machine monitor of a computer system. The VMM is loaded on the computer system to support a service VM and a guest VM. The service operating system is booted in the service VM during the preboot phase. The guest operating system is booted in the guest VM of the computer system. During operating system runtime of the guest operating system a VM switch is performed from the guest VM to the service VM without rebooting the computer system.

US 2006/075402 relates to a method for providing support for a timer associated with a virtual machine monitor.

It is the object of the present invention to provide an improved operating method of a client hypervisor-based terminal device, as well as a corresponding system.

This object is solved by the subject matter of the independent claims.

Preferred embodiments are defined by the dependent claims.

### SUMMARY

One or more aspects of the exemplary embodiments provide a client hypervisor-based terminal device.

One or more aspects of the exemplary embodiments provide a client hypervisor-based terminal device which can efficiently control a plurality of applications.

One or more aspects of the exemplary embodiments provide a method for controlling an operation of a virtual machine in a client hypervisor-based terminal device.

One or more aspects of the exemplary embodiments provide a client hypervisor-based terminal device which can efficiently provide an advertisement according to an advertisement policy, and an operating method thereof.

According to an aspect of an exemplary embodiment, there is provided operating method of a client hypervisor-based terminal device including a user module which is operated on a first virtual machine among a plurality of virtual machines operated on a client hypervisor of the client hypervisor-based terminal device and a service module which is operated on a second virtual machine among the plurality of virtual machines, the operating method including: monitoring an operation of the user module, determining whether the operation of the user module coincides with a pre-set policy, and, stopping the operation of the user module and operating the service module, in response to determining that the operation of the user module coincides with the pre-set policy.

According to an aspect of another exemplary embodiment, there is provided a client hypervisor-based terminal device including: hardware, a client hypervisor part that manages use of the hardware, a user module installed on the client hypervisor part that uses the hardware under control of the client hypervisor part, a service module installed on the client hypervisor part that uses the hardware under control of the hypervisor part, and a controlling part which monitors an operation of the user module and determines whether to operate the service module based on a result of the monitoring, wherein the client hypervisor part operates the service module or the user module based on a result of the determining by the controlling part.

According to an aspect of still another exemplary embodiment, there is provided a client hypervisor-based terminal device including: hardware which includes at least one central processing unit (CPU) and a storage unit, a client hypervisor part installed on the hardware that manages use of the hardware, a first virtual machine installed on the client hypervisor part that uses the hardware under control of the client hypervisor part, a second virtual machine \ installed on the client hypervisor part that uses the hardware under control of the client hypervisor part, a first application which is operated on the first virtual machine, a second application which is operated on the second virtual machine, and a controlling part which control operations of the first application and the second application according to a policy defining operational conditions of the first application and the second application, wherein the client hypervisor part allocates use of the hardware to the first application and/or the second application according to a request from the controlling part.

According to an aspect of still another exemplary embodiment, there is provided an advertisement providing system including: an advertisement management server which stores an advertisement policy, and a terminal device including a client hypervisor part which uses hardware, a user module installed on the client hypervisor part to be operated under control of the client hypervisor part, an advertisement module installed on the client hypervisor part to provide an advertisement under control of the client hypervisor part, and a controlling part which monitors a use time of the user module, and a controlling part which monitors a use time of the user module, wherein the client hypervisor determines whether to operate the advertisement module by applying a result of monitoring of the controlling part to the advertisement policy received from the advertisement management server.

### BRIEF DESCRIPTION OF THE DRAWINGS

The above and other aspects will become more apparent by describing in detail exemplary embodiments with reference to the attached drawings in which:

FIG. 1 is a block diagram illustrating a client hypervisor-based terminal device according to an exemplary embodiment;

FIG. 2 is a view illustrating an advertisement system to which a client hypervisor-based terminal device is applied according to an exemplary embodiment;

FIG. 3 is a block diagram illustrating a client hypervisor-based terminal device according to an exemplary embodiment;

FIG. 4 is a block diagram illustrating a client hypervisor-based terminal device according to another exemplary embodiment;

FIG. 5 is a block diagram illustrating a client hypervisor-based terminal device according to still another exemplary embodiment;

FIG. 6 is a view illustrating an operating method of a client hypervisor-based terminal device according to an exemplary embodiment;

FIG. 7 is a view illustrating an operating method of a client hypervisor-based terminal device according to another exemplary embodiment;

FIG. 8 is a block diagram illustrating a client hypervisor-based terminal device according to still another exemplary embodiment;

FIG. 9 is a block diagram illustrating a client hypervisor-based terminal device according to still another exemplary embodiment;

FIG. 10 is a block diagram illustrating a client hypervisor-based terminal device according to still another exemplary embodiment;

FIG. 11 is a view illustrating an operating method of a client hypervisor-based terminal device according to an exemplary embodiment;

FIG. 12 is a view illustrating an example of an option selection UI according to an exemplary embodiment;

FIG. 13 is a view illustrating an operating method of a terminal device which can set a state of a user virtual machine in a background according to an exemplary embodiment;

FIG. 14 is a view illustrating an operating method of a terminal device which can set a state of a user virtual machine in a background according to an exemplary embodiment;

FIGS. 15 and 16 are views illustrating examples of screens to guide an available remaining time of a user module; and

FIG. 17 is a flowchart illustrating an advertising method according to an exemplary embodiment.

### DETAILED DESCRIPTION OF EXEMPLARY EMBODIMENTS

Exemplary embodiments will now be described more fully with reference to the accompanying drawings to clarify aspects, aspects of the application. The exemplary embodiments may, however, be embodied in many different forms and should not be construed as limited to the exemplary embodiments set forth herein. Rather, the exemplary embodiments are provided so that this disclosure will be thorough and complete, and will fully convey the scope of the application to those of ordinary skill in the art. It will be understood that when an element, layer or region is referred to as being "on" another element, layer or region, the element, layer or region can be directly on another element, layer or region or intervening elements, layers or regions.

The terms used herein are for the purpose of describing particular exemplary embodiments only and are not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, layers, regions, elements, components, and/or groups thereof, but do not preclude the presence or addition of one or more other features, integers, steps, operations, layers, regions, elements, components, and/or groups thereof. As used herein, the term "and/or" includes any and all combinations of one or more of the associated listed items.

For expository purposes, the expression 'operating an application (or a user module, an advertisement module, a service module or the like) by a client hypervisor part' as used herein means that the client hypervisor part (or an OS switch) assigns hardware resources to the application so that the application (or the user module, the advertisement module, the service module or the like) can be operated.

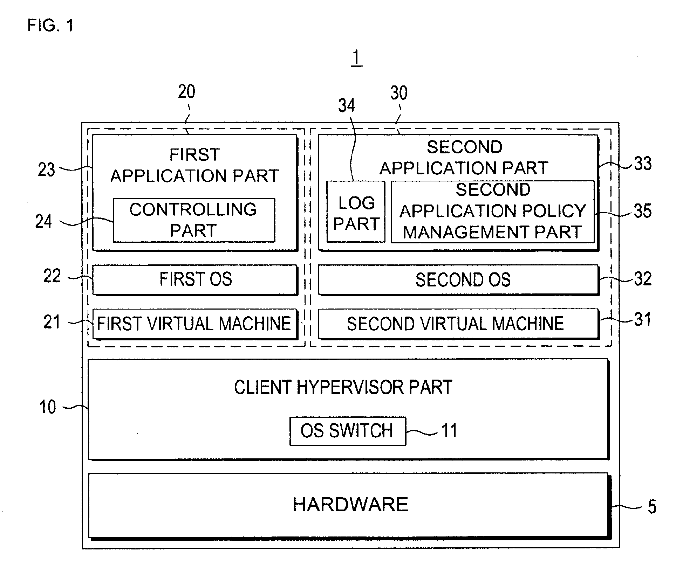

FIG. 1 is a block diagram illustrating a client hypervisor-based terminal device according to an exemplary embodiment.

Referring to FIG. 1, a terminal device 1 according to an exemplary embodiment includes hardware 5, a client hypervisor part 10, a user module 20, and a service module 30.

The client hypervisor part 10 is installed on the hardware 5 to manage use of the hardware 5. The user module 20 and the service module 30 are installed on the client hypervisor part 10 and are assigned resources of the hardware 5 under control of the client hypervisor part 10 to be operated.

The user module 20 includes a first virtual machine 21, a first operating system (OS) 22, and a first application part 23. The first application part 23 refers to at least one application and may have a controlling part 24 embedded therein.

The service module 30 includes a second virtual machine 31, a second OS 32, and a second application part 33. The second application part 33 refers to at least one application and may have a log part 34 and a second application policy management part 35 embedded therein.

The controlling part 24 monitors an operation of the first application part 23 and can control an operation of the second application part 33 based on a result of monitoring. If it is determined that the second application part is to be operated, the controlling part 24 may request the client hypervisor part 10 to operate the second application part, and the client hypervisor part 10 may assign resources to the service module 30 in response to such a request to operate the service module 30.

The second application policy management unit 35 determines whether to stop an operation of the service module 30 and, if it is determined that the operation of the service module 30 is to be stopped or if the operation of the service module 30 is completed, the second application policy management unit 35 notifies the client hypervisor part 10 of the service module operation's stop or completion. According to such a notification, the client hypervisor part 10 may assign resources to the user module 20 and operate the user module 20 again.

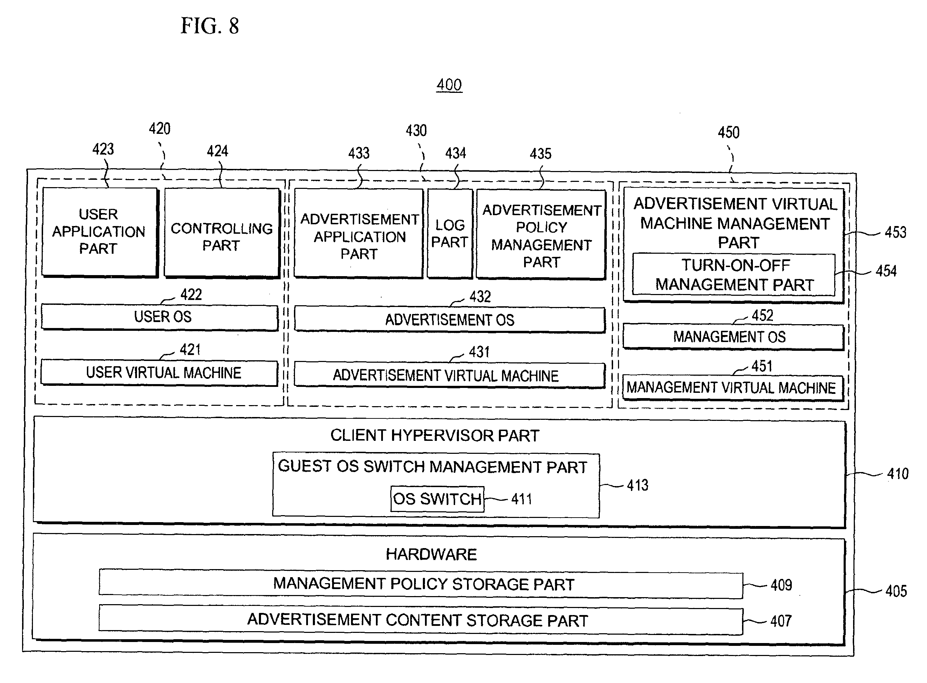

In an alternative exemplary embodiment of FIG. 1, a virtual machine management part (not shown) (for example, an advertisement virtual machine management part of FIGS. 8 to 10) may be separately provided. In this alternative exemplary embodiment, if it is determined that the second application part 33 is to be operated based on the result of monitoring of the first application part 23, the controlling part 24 may request the virtual machine management part (not shown) to operate the second application part 33, and the virtual machine management part (not shown) may select a certain service module from among a plurality of service modules in response to such a request and may request the client hypervisor part 10 to execute the selected service module.

The exemplary embodiment of FIG. 1 may be changed in various forms. For example, the second application part may be an application which reproduces advertisement contents, and the first application part is a pay application which is used by a user. Also, the controlling part 24 may be realized by a separate application other than an application embedded in the first application part 23 or may be installed on a virtual machine (not shown) separately provided other than on the first virtual machine 21. These changes will be explained below with reference to the drawings.

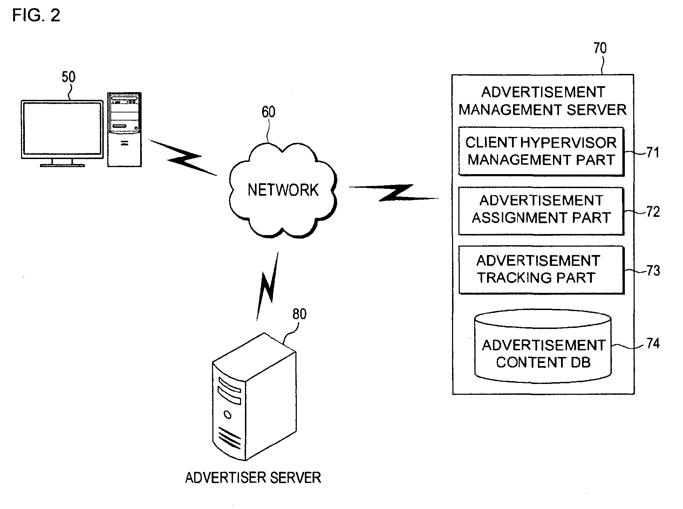

FIG. 2 is a view illustrating a client hypervisor-based terminal device which is applied to an advertisement system (hereinafter, referred to as an 'advertisement system') according to an exemplary embodiment.

Referring to FIG. 2, an advertisement system according to an exemplary embodiment includes a client hypervisor-based terminal device (hereinafter, referred to as a 'terminal device') 50, an advertisement management server 70, and an advertiser server 80, which are connected to one another through a network 60 to be able to mutually communicate with one another. The network 60 recited herein refers to a wireless or wired communication network and is not limited to a specific kind of communication network.

In the present exemplary embodiment, the terminal device 50 is operated based on a client hypervisor. In general, a hypervisor is a virtual platform to execute a plurality of operation systems (OSs) simultaneously in a server and may be called a virtual machine monitor. The client hypervisor is the hypervisor of this concept applied to a terminal device other than a server.

In the terminal device 50 operating based on the client hypervisor, the client hypervisor may serve as a main OS and virtual machines may serve as guest OSs on the client hypervisor.

The terminal device 50 may include hardware, a client hypervisor part installed on the hardware to manage use of the hardware, at least one virtual machine installed on the client hypervisor part to use the hardware under control of the client hypervisor part, an OS installed in each virtual machine, and at least one application part installed on each OS.

The application parts include an advertisement application part to reproduce advertisement contents or an application part to be used according to user's necessity.

In FIG. 2, the terminal device 50 is illustrated in the form of a desk top computer. However, this should not be considered as limiting. For example, the terminal device 50 may be any kind of device in which an OS can be used, that is, at least one OS can be driven simultaneously and a resource distribution and an independent operation can be guaranteed among the OSs. For example, the terminal device may be a computer device (e.g., laptop computer, desktop computer, tablet device, etc.), a cellular phone, a personal digital assistant (PDA), or a smart phone. The terminal device 50 will be explained in detail below with reference to the drawings.

The advertisement management server 70 receives advertisement contents and data to establish an advertisement policy from the advertiser server 80, and transmits the advertisement contents to the terminal device 50. In this exemplary embodiment, one terminal device 50 and one advertiser server 80 are connected to the advertisement management server 70 via the network 60. However, a plurality of advertiser servers 80 and a plurality of terminal devices 50 may be connected to the advertisement management server 70.

The advertisement management server 70 may include a client hypervisor management part 71, an advertisement assignment part 72, an advertisement tracking part 73, and an advertisement content database (DB) 74.

The client hypervisor management part 71 manages the client hypervisor part of the terminal device 50. The expression 'managing the client hypervisor part' includes operations of transmitting, storing, updating, and deleting information so that the client hypervisor part maintains latest information.

The advertiser server 80 may provide data to establish an advertisement policy of an advertiser (or an advertisement policy itself) and advertisement contents to the advertisement assignment part 72. The advertisement assignment part 72 may transmit the data to establish the advertisement policy of the advertiser (or the advertisement policy itself) to the terminal device 50. Accordingly, the advertisement policy of the advertiser may be applied when advertisement contents are reproduced in the terminal device 50.

The advertisement tracking part 73 receives a log, in which a result of reproducing advertisement contents in the terminal device 50 is recorded, through the network 60, and tracks an advertisement result using the log. A result of tracking by the advertisement tracking part 73 may be used to extend an available time for a user to use the terminal device 50 or an available time to use an application, such as a user virtual machine or a user application part installed in the terminal device 50.

In general, the user should pay a predetermined amount of money to purchase the user terminal device 50 or a predetermined application. In this exemplary embodiment, such a case may be connected to an advertisement system. In other words, if the user views an advertisement through the terminal device 50, a result of viewing is converted into a cost of the terminal device 50 or a predetermined application and substituted for the cost. In this case, the user can expect a cost-saving effect and the advertiser can take an opportunity of exposing the user to an advertisement.

The advertisement content DB 74 is a data base to store advertisement contents and stores advertisement contents on advertisements ordered by several advertiser servers 80. The advertisement content DB 74 may store one or more advertisement contents for each advertiser server 80. Also, the advertisement content DB 74 may additionally store the data to establish the advertisement policy of the advertiser server 80 (or the advertisement policy).

If the advertisement policy or the data to establish the advertisement policy is received from the advertiser server 80, the advertisement assignment part 72 transmits the data to establish the advertisement policy to the terminal device 50 as it is or establishes an advertisement policy and transmits the advertisement policy to the terminal device 50.

According to an alternative exemplary embodiment, the advertiser server 80 may be configured to directly transmit the advertisement contents and/or the advertisement policy to the terminal device 50 without passing through the advertisement management server 70. In this alternative embodiment, the advertisement management server 70 performs a managing operation of the client hypervisor and an advertisement tracking operation, and the advertiser server 80 provides the advertisement contents and/or the advertisement policy to the terminal device 50.

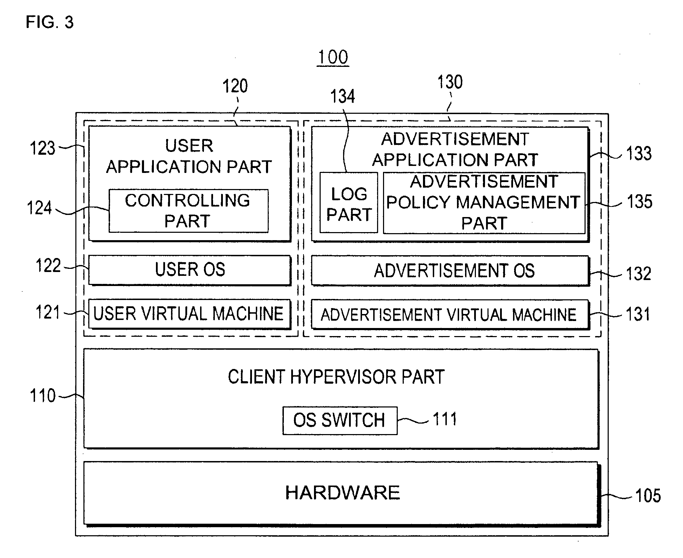

FIG. 3 is a block diagram illustrating a client hypervisor-based terminal device which is applied to an advertisement system providing an advertisement service according to an exemplary embodiment.

Referring to FIG. 3, a terminal device 100 according to an exemplary embodiment includes hardware 105, a client hypervisor part 110, a user module 120, and an advertisement module 130.

The hardware 105 may include a central processing unit (CPU), a hard disk drive (HDD), a graphic card, a read only memory (ROM), a random access memory (RAM), an input/output device, a battery, and other hardware. The input/output device may receive input from or output information to a user of the terminal device 100 or another device. For example, the input/output device may be a monitor, a keyboard, a network interface card, an external storage or other hardware.

The client hypervisor part 110 manages use of hardware resources (hereinafter, referred to as 'resources') that the terminal device 100 includes, and assigns the resources to the user module 120 or the advertisement module 130.

The user module 120 and the advertisement module 130 are installed on the client hypervisor part 110 and are assigned resources by the client hypervisor part 110 to be able to operate independently from each other.

In this exemplary embodiment, a user virtual machine 121 and an advertisement virtual machine 131 are installed on the client hypervisor part 110.

The client hypervisor part 110 includes an OS switch 111, and the OS switch 111 selectively assigns input/output control authority for the input/output device to the user virtual machine 121 or the advertisement virtual machine 131.

According to an exemplary embodiment, if the terminal device 100 is turned on and starts to be operated, the OS switch 111 of the client hypervisor part 110 gives the input/output control authority to a user OS 122, which is pre-set as default. After that, if a request for an operation of an application part 123 is received from a controlling part 124, the OS switch 111 gives the input/output control authority from the user virtual machine 121 to the advertisement virtual machine 131. Also, if reproducing of advertisement contents is completed, an advertisement policy management part 135 requests the client hypervisor part 110 to give the input/output control authority from the advertisement virtual machine 131 back to the user virtual machine 121. The advertisement policy management unit 135 monitors an operation of an advertisement application part 133 and, as a result of monitoring, if it is determined that the advertisement application part 133 is operated according to a condition defined by the advertisement policy, the advertisement policy management part 135 requests the client hypervisor part 110 to give the input/output control authority to the user virtual machine 121. In this regard, input/output control may be selectively allocated.

Operating the user OS 122 or the advertisement OS 132 selectively by the client hypervisor part 110 means that resources are assigned to any selected one of the user OS 122 and the advertisement OS 132. In order to assign resources, the OS switch 111 of the client hypervisor part 110 may give the input/output control authority to the user virtual machine 121 or the advertisement virtual machine 131. For example, if the input/output control authority is given to the advertisement virtual machine 131, resources capable of performing operations, other than operations of receiving an input from the user or outputting to the user, are assigned to the user virtual machine 121 and resources capable of performing the input/output operations are assigned to the advertisement virtual machine 131.

The user module 120 and the advertisement module 130 are disposed on the client hypervisor part 110. The user module 120 includes the user virtual machine 121, the user OS 122, and a user application part 123, and the advertisement module 130 includes the advertisement virtual machine 131, the advertisement OS 132, and the advertisement application part 133.

In this exemplary embodiment, the user module 120 includes one user virtual machine 121, one user OS 122, and one user application part 123. However, this should not be considered as limiting. In other words, the user module 120 may include a plurality of user virtual machines 121, a plurality of user OSs 122, and a plurality of user application parts 123.

The user application part 123 includes the controlling part 124. The controlling part 124 monitors the operation of the user application part 123 and determines whether to operate the advertisement application part 123 according to a result of monitoring and, if it is determined that the advertisement application part 123 is to be operated, the controlling part 124 requests the client hypervisor part 110 to operate the advertisement application part 133. Meanwhile, the controlling part 124 may determine whether to operate the advertisement application part 133 by referring to the advertisement policy. The advertisement policy may be stored in hardware such as a storage unit (e.g., RAM, ROM, flash memory, etc.) (not shown).

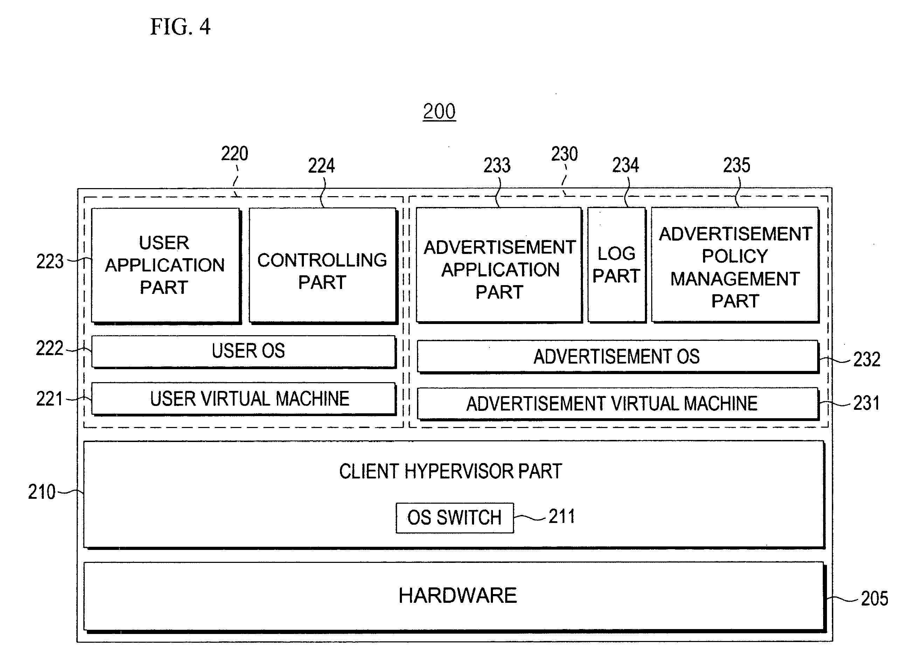

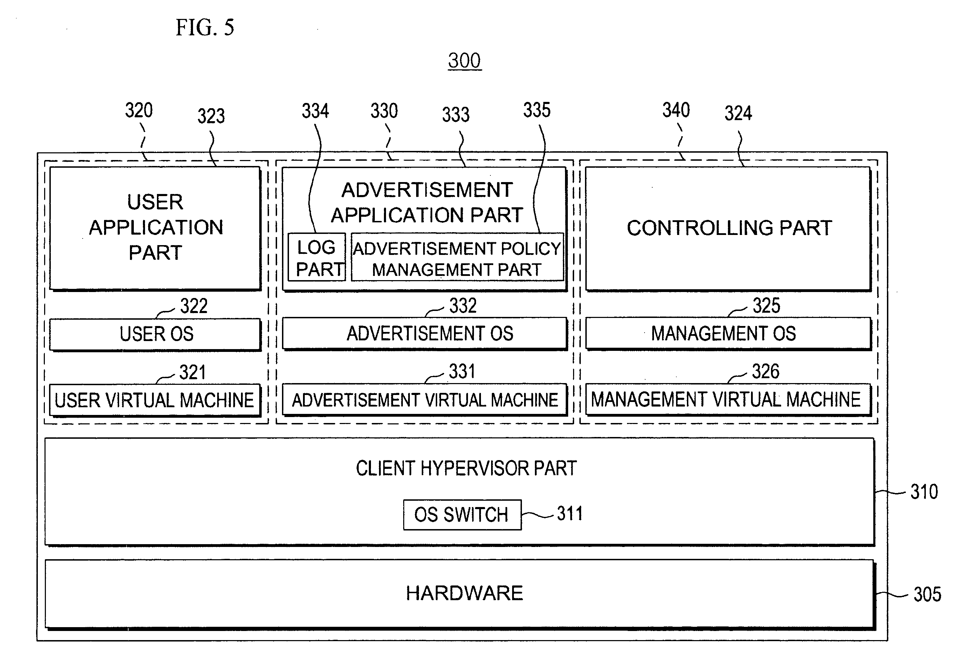

According to an exemplary embodiment, the controlling part 124 monitors an operating time of the user application part 123 and determines whether the time is identical to an operating time of the user application part 123 defined by the advertisement policy. For example, the advertisement policy defines that the user application part 123 can be used for two hours and the advertisement application part 133 can be operated for 5 minutes every two hours. In this case, the controlling part 124 monitors a use time of the user application part 123 and, if it is determined that the user application part 123 was used for two hours, the controlling part 124 requests the client hypervisor part 110 to operate the advertisement application part 133. In this embodiment, the controlling part 124 is embedded in the user application part 123. However, this is merely an example and the controlling part 124 may be realized in other forms as shown in FIGS. 4 and 5, as will be described below.

According to an alternative exemplary embodiment, if an accumulated operating time of the advertisement application part 133 is less than a reference operating time defined by the advertisement policy, as a result of referring the accumulated operating time of the advertisement application part 133 and the advertisement policy, the controlling part 124 may request the advertisement application part 133 to be operated. In this case, the controlling part 124 may obtain the accumulated operating time of the advertisement application part 133 using a log which is recorded by a log part 134 of the advertisement module 130. For example, if the advertisement policy sets the reference operating time to be 2 hours and the accumulated operating time of the advertisement application part 133 is determined to be one hour and 30 minutes based on the log recorded by the log part 134, the advertisement application part 133 should be operated for at least 30 minutes more according to the advertisement policy of the advertiser. In this case, the controlling part 124 may request the client hypervisor part 110 to operate the advertisement application part 133. The log recorded by the log part 134 may be stored in hardware such as a storage unit (not shown).

The controlling part 124 monitors the use time of the user application part 123 and has the user view an advertisement when the user application part 123 is used as much as a predetermined time. The controlling part 124 refers to the advertisement policy established or provided by the advertisement policy management part 135 of the advertisement module 130.

The advertisement policy may include a ratio of a reproducing time of advertisement contents to the use time of the user application part 123. Also, the advertisement policy may include a reference operating time of the advertisement application part 133.

The user application part 123 can interface with the user. In other words, the user application part 123 may provide a graphical user interface (UI) screen to provide predetermined information to the user and may receive a predetermined signal from the user through the UI screen.

The advertisement virtual machine 131, the advertisement OS 132, and the advertisement application part 133 are dedicated modules for advertising. The advertisement virtual machine 131 is installed on the client hypervisor part 110, the advertisement OS 132 is installed on the advertisement virtual machine 131, and the advertisement application part 133 is installed on the advertisement OS 132.

The advertisement OS 132 is a dedicated OS for an advertisement system only, and operates the advertisement application part 133 to reproduce advertisement contents. The advertisement OS 132 is operated by being given the input/output control authority of the input/output device by the client hypervisor part 110. If the advertisement virtual machine 131 is given the input/output control authority by the client hypervisor part 110, the advertisement OS 132 is automatically executed to operate the advertisement application part 133. Accordingly, the advertisement application part 13 can reproduce the advertisement contents.

The advertisement application part 133 is a dedicated application only for reproducing advertisement contents, and may read out and reproduce advertisement contents stored in the hardware 105 such as a memory or reproduce embedded contents.

The advertisement application part 133 includes the log part 134 and the advertisement policy management part 135. The log part 134 records information on reproducing of the advertisement contents of the advertisement application part 133 in the form of a log and stores the information in the hardware 105, such as a memory, or transmits the information to the advertisement management server 70.

The advertisement policy management part 135 may provide the advertisement policy received from the advertisement management server 70 or the advertiser server 80 to the controlling part 124. Also, if the advertisement policy management part 135 receives the data to establish the advertisement policy from the advertisement management server 70 or the advertiser server 80, the advertisement policy management part 135 establishes an advertisement policy based on the received data and provides the advertisement policy to the controlling part 124. The advertisement policy may define the operating times of the user application part 123 and the advertisement application part 133, such as an advertisement schedule.

The advertisement policy management part 135 establishes the advertisement policy according to the advertisement policy of the advertiser. For example, the advertisement policy management part 135 may establish the advertisement policy such that the use time of the advertisement OS 132 varies according to who uses the user application part 123.

For example, the advertisement policy management part 135 may establish an advertisement policy of a user A and an advertisement policy of a user B. The advertisement OS 132 is set to be operated if the application part 123 of the user A is used for three hours or if the application part 123 of the user B is used for five hours. Also, the advertisement policy may be established such that the operating time of the advertisement OS 132 varies..

An example of schedule information set by the advertisement policy management part 135 is illustrated in table 1 as follows:

**[Table 1]**

| Name of User Application Part | Use Time | Reference Operating Time of Advertisement Application Part |
|---|---|---|
| A | 03:00 | 0:30 |
| B | 05:00 | 2:00 |
| C | 02:30 | 0:30 |

Table 1 is merely an example to explain the advertisement policy established by the advertisement policy management part 135 and the present application is not limited to table 1.

If the advertisement policy having the schedule of table 1 is established, the controlling part 124 monitors a use time of the user application part 123 of the user A and, if three hours passes, the controlling part 124 requests the client hypervisor part 110 such that the advertisement application part 133 reproduces advertisement contents for 30 minutes. This operation is achieved without user's intervention. In the case of monitoring a use time of the user application part of the user B, if five hours passes, the controlling part 124 may request the client hypervisor part 110 such that the advertisement application part 133 reproduces advertisement contents for two hours.

According to an exemplary embodiment, the controlling part 124 may directly communicate with the advertisement assignment part 72 of the advertisement management server 70. In other words, the controlling part 124 may be configured to directly receive the advertiser's advertisement policy from the advertisement assignment part 72. In this case, the advertisement management server 70 may directly control operations of the advertisement module or the user module installed in the terminal device. For example, the advertisement management server 70 may directly transmit the advertisement policy to the controlling part 124 or the advertisement policy management part 135. If the advertisement policy management part 135 receives the advertisement policy or the data to establish the advertisement policy from the advertisement management server 70, the advertisement policy management part 135 establish the advertisement policy and transmits it to the controlling part 124.

FIG. 4 is a block diagram illustrating a client hypervisor-based terminal device according to another exemplary embodiment.

Referring to FIG. 4, a terminal device 200 according to another exemplary embodiment includes hardware 205, a client hypervisor part 210, a user module 220, and an advertisement module 230. The user module 220 includes a user virtual machine 221, a user OS 222, a user application part 223, and a controlling part 224, and the advertisement module 230 includes an advertisement virtual machine 231, an advertisement OS 232, an OS application part 233, a log part 234, and an advertisement policy management part 235. Client hypervisor part 210 includes OS switch 211.

As shown in FIG. 4, the terminal device 200 has a configuration similar to that of the terminal 100 of FIG. 3. Accordingly, the elements performing the same or similar functions are assigned similar numerals and thus a detailed description thereof is omitted.

The embodiment of FIG. 4 differs from the embodiment of FIG. 3 in that the controlling part 224 is an application provided separately from the user application part 223, and the log part 234 and the advertisement policy management part 235 are applications provided separately from the advertisement application part 233. In other words, the controlling part 224, the log part 234, and the advertisement policy management part 235 are separate applications. The functions of these elements are the same as those of FIG. 3.

Specifically, the controlling part 224 monitors an operation of the user application part 223 and determines whether to operate the advertisement application part 233 according to a result of monitoring. If it is determined that the advertisement application part 233 is to be operated, the controlling part 224 requests the client hypervisor part 210 to operate the advertisement application part 233.

Also, in this embodiment, the log part 234 and the advertisement policy management part 235 are applications provided separately from the advertisement application part 233, but they are the same as those of FIG. 3 in their functions. In other words, the advertisement policy management part 235 establishes an advertisement policy or receives an advertisement policy from an advertisement management server or an advertiser server, and transmits the advertisement policy to the controlling part 224.

In a modified exemplary embodiment, albeit not shown, the controlling part 224 may be a function module included in the user application part 223, and the log part 234 and the advertisement policy management part 235 may be independent applications provided separately from the advertisement application part 233.

In another modified exemplary embodiment, the controlling part 224 may be a function module included in the user application part 223 and the log part 234 may be a function module included in the advertisement application part 233, but the advertisement policy management part 235 may be an independent application.

FIG. 5 is a block diagram illustrating a client hypervisor-based terminal device according to another exemplary embodiment.

Referring to FIG. 5, a terminal device 300 includes hardware 305, a client hypervisor part 310, a user module 320, an advertisement module 330, and a management module 340.

The user module 320 includes a user virtual machine 321, a user OS 322, and a user application part 323. Client hypervisor part 310 includes OS switch 311.

The advertisement module 330 is an advertisement service module which includes an advertisement virtual machine 331, an advertisement OS 332, and an advertisement application part 333, and a log part 334 and an advertisement policy management part 335 are embedded in the advertisement application part 333.

The management module 340 includes a management virtual machine 326 which is given resources of the hardware 305 and uses them under control of the client hypervisor part 310, a management OS 325 installed on the management virtual machine 326, and a controlling part 324 installed on the management OS 325.

As shown in FIG. 5, the terminal device 300 has a configuration similar to that of the terminal device 100 of FIG. 3. Accordingly, the elements performing the same or similar functions are given similar reference numerals and thus a detailed description thereof is omitted.

The embodiment of FIG. 5 differs from the embodiment of FIG. 3 in that the controlling part 324 is realized by an independent application installed on a separate virtual machine and a separate OS. Accordingly, in the same way as in FIG. 3, the controlling part 324 monitors an operation of the user application part 323 and determines whether to operate the advertisement application part 333 by referring to the advertisement policy. However, since the controlling part 324 is operated on the separate virtual machine, it is possible to always operate the management module 340 regardless of the operation of the user application part 323. In other words, in the embodiment of FIG. 3, the controlling part is embedded in the user application part and thus is operated only if the user application part to be monitored is operated. However, in the embodiment of FIG. 5, the controlling part can be operated regardless of whether the user application part to be monitored is operated or not. Therefore, in the embodiment of FIG. 3, the controlling part should be embedded in every user application part. However, in the embodiment of FIG. 5, even if one management module 340 is provided, regardless of the number of user application parts monitored, all of the user application parts can be monitored.

In the embodiment of FIG. 4, the controlling part is realized by an application provided separately from the user application part. Therefore, in the embodiment of FIG. 4, even if one controlling part is provided regardless of the number of user application parts, all of the user application parts can be monitored. However, in the embodiment of FIG. 5, even if the user application parts to be monitored use different virtual machines and OSs, one management module can be provided.

Since the other elements of FIG. 5 are the same as those of FIG. 3, a detailed description thereof is omitted.

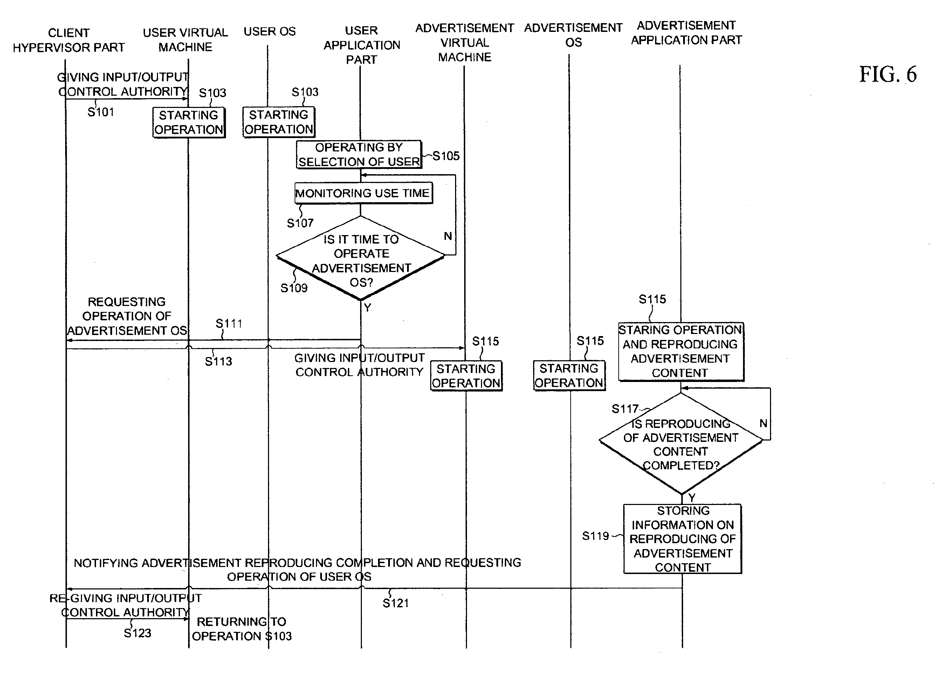

FIG. 6 is a flowchart illustrating an operating method of a client hypervisor-based terminal device according to an exemplary embodiment.

Hereinafter, the operating method of the client hypervisor-based terminal device according to an exemplary embodiment will be explained with reference to the advertisement system and the terminal device illustrated in FIGS. 2 and 3. However, it should be understood that the operating method of the present embodiment can be achieved by a system and a device other than the advertisement system and the terminal device of FIGS. 2 and 3.

Referring to FIG. 6, if the terminal device 100 is turned on, the client hypervisor part 110 is operated. At this time, the client hypervisor part 110 gives an input/output control authority to a certain OS which is pre-set as default. Herein, it is assumed that the client hypervisor part 110 is set to give the input/output control authority to the virtual machine 121 when it is initially operated. Accordingly, the OS switch 111 of the client hypervisor part 110 gives the input/output control authority to the user module (operation S101).

If the user module is given the input/output control authority by the client hypervisor part 110, the user OS 122 starts to be operated on the user virtual machine 121 (operation S103).

If the user OS 122 is operated, a user may selectively execute at least one user application part 123 which is installed on the user OS 122. If the user selects the user application part 123, the selected user application part 123 starts to be operated (operation S105). If the operation of the user application part 123 starts, the controlling part 124 monitors a use time of the user application part 123 (operation S107).

If it is determined that it is time to operate the advertisement OS 132 while the controlling part 124 is monitoring the use time of the user application part 123 (operation S109-Y), the controlling part 124 requests the client hypervisor part 110 to operate the advertisement OS 132 (operation S111).

The client hypervisor part 110, which has been requested to operate the advertisement OS 132 by the controlling part 124, gives the input/output control authority to the advertisement virtual machine 131 (operation S113).

As the advertisement virtual machine 131 is given the input/output control authority, the advertisement virtual machine 131 and the advertisement OS 132 start to be operated and the advertisement application part 133 is operated on the advertisement OS 132. The advertisement application part 133 reproduces advertisement contents (operation S115).

If the reproducing of the advertisement contents by the advertisement application part 133 is completed (operation S117-Y), the log part 134 records information on the reproducing of the advertisement contents in the form of a log (operation S119). The log part 134 may already store a corresponding log and may transmit the log to the advertisement management server 70 afterward.

If the reproducing of the advertisement contents is completed and the information on the reproducing is also stored, the advertisement application part 133 notifies the client hypervisor part 110 that the advertisement reproducing is completed (operation S121).

If the client hypervisor part 110 is notified that the advertisement reproducing is completed, the client hypervisor part 110 gives the input/output control authority which is now given to the advertisement virtual machine 131 back to the user virtual machine 121 (operation S123). If the input/output control authority is given back to the user virtual machine 121 by the client hypervisor part 110, operation S103 is resumed and the same operations are repeated.

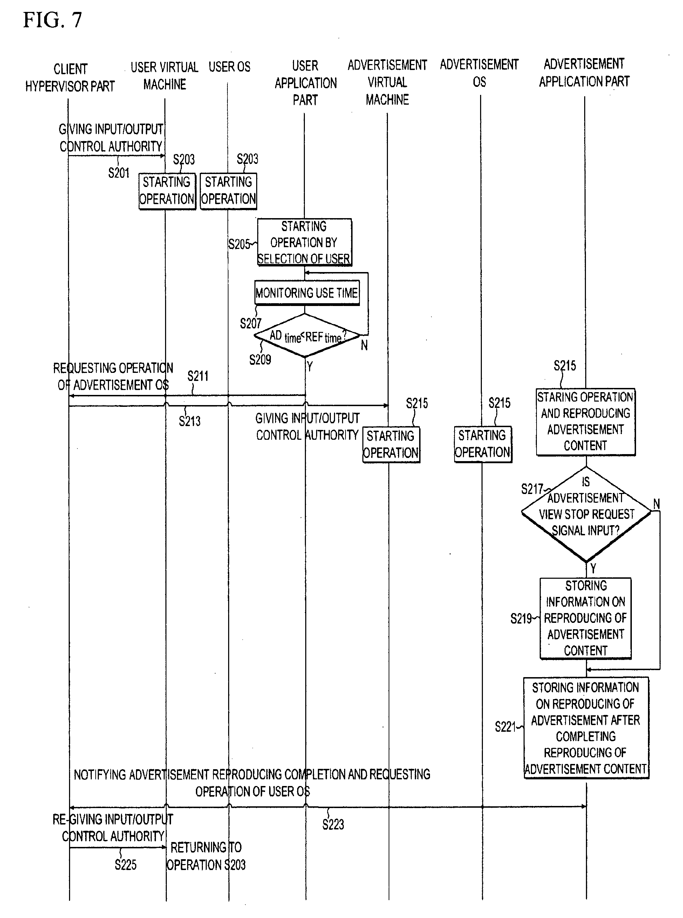

FIG. 7 is a flowchart illustrating an operating method of a client hypervisor-based terminal device according to an exemplary embodiment. Hereinafter, the operating method of the client hypervisor-based terminal device according to an exemplary embodiment will be explained with reference to the advertisement system and the terminal device illustrated in FIGS. 2 and 3. However, it should be understood that the operating method may be achieved by a system and a device other than the advertisement system and the terminal device of FIGS. 2 and 3.

Operations S201 to S207 are the same as operations 5101 to S107 of FIG. 6. Therefore, a description of operations S201 to S207 is omitted.

If it is determined that an accumulated operating time (ADtime) of the advertisement application part 133 is less than a reference operating time (REFtime) set according to a predetermined advertisement schedule, while the controlling part 124 is monitoring a use time of the user application part 123 (operation S209-Y), the user application part 123 requests the client hypervisor part 110 to operate the advertisement OS 132 via the user OS 122 and the user virtual machine 121 (operation S211).

Operations S213 and S215 after the client hypervisor part 110 has been requested to operate the advertisement OS 132 by the user application part 123 are the same as operations S113 and S115 of FIG. 6. Therefore, a detailed description of operations S213 and S215 is omitted.

In operation S215, while advertisement contents are being reproduced by the advertisement application part 133, a user may input an advertisement view stop request signal. If the advertisement application part 133 receives the advertisement view stop request signal (operation S217-Y), the advertisement application part 133 records information on the reproducing of the advertisement contents which is reproduced until the advertisement view stop request signal is input in the form of a log using the log part 134 (operation S219).

If the advertisement application part 133 does not receive the advertisement view stop request signal (operation S217-N), the advertisement application part 133 completes the reproducing of the advertisement contents and then records the information on the reproducing of the advertisement contents using the log part 134 (operation S221).

After that, the advertisement application part 133 requests the client hypervisor part 110 to notify that the reproducing of the advertisement is completed and to operate the user OS 122 (operation S223).

The client hypervisor part 110 gives the input/output control authority which is currently given to the advertisement virtual machine 131 back to the user virtual machine 121 (operation S225). If the input/output control authority is given back to the user virtual machine 121 by the client hypervisor part 110, operation S203 is resumed and the same operations are repeated.

In order to obtain an optimum advertisement effect from the advertiser's perspective, it is desirable that the user does not stop reproducing the advertisement contents once the advertisement contents are reproduced. However, if the user has no option while unavoidably continuing to view the advertisement, the user may be hostile to the advertisement. Under the above procedure, the user has an option of stopping the advertisement while the advertisement contents are being reproduced and accordingly the user has an option of viewing the advertisement again afterward. At this time, the log part 134 records the information on the reproducing until the user stops viewing the advertisement so that the user can be compensated for an actually viewed range even if the user views only a part of the advertisement.

In the embodiments described above with reference to FIGS. 1 to 7, one advertisement application part is provided. However, this should not be considered as limiting. A plurality of advertisement application parts may be provided. Hereinafter, exemplary embodiments in which a plurality of advertisement application parts are provided will be explained with reference to FIGS. 8 to 10.

FIG. 8 is a block diagram illustrating a client hypervisor-based terminal device according to another exemplary embodiment.

Referring to FIG. 8, a user terminal device 400 according to another exemplary embodiment includes hardware 405, a client hypervisor part 410, a user module 420, an advertisement module 430, and a management module 450.

The hardware 405 provides resources to the modules 420, 430, 450.

The hardware 405 in the present exemplary embodiment includes an advertisement content storage part 407 and a management policy storage part 409. The advertisement content storage part 407 stores advertisement contents provided from the advertisement management server 70. The management policy storage part 409 stores an advertisement virtual machine management policy provided from the advertisement management server 70.

The advertisement content storage part 407 and the management policy storage part 409 may be managed by the advertisement module 430.

The client hypervisor part 410 may selectively operate the user module 420 or the advertisement module 430.

If the user module 420 or the advertisement module 430 is given a resource use authority by the client hypervisor part 410, the corresponding module starts to be operated. If the user module 420 or the advertisement module 430 is given a resource use authority including the input/output control authority (hereinafter, referred to as a 'first resource use authority'), the corresponding module is operated in a main (foreground) of the user terminal device 400. If the user module 420 or the advertisement module 430 is given a resource use authority which does not include the input/output control authority (hereinafter, referred to as a 'second resource use authority'), the corresponding module is operated in a background of the user terminal device 400. If the module is operated in the background, the module is being operated but the user does not recognize that the module is being operated.

The client hypervisor part 410 may be requested to operate the advertisement module 430 by the controlling part 424. In this case, the client hypervisor part 410 may give the first resource use authority to the advertisement module 430. Also, the client hypervisor part 410 may be requested to operate the user module 420 by the advertisement module 430. In this case, the client hypervisor part 410 may give the first resource use authority to the user module 420.

A guest OS switch management part 413 is installed in the client hypervisor part 410 and controls an OS switch 411 to give or withdraw the resource use authority when the client hypervisor part 410 operates the user module 420 and/or the advertisement module 430. Also, the guest OS switch management part 413 may give or withdraw only the input/output control authority of the resource use authority. The guest OS switch management part 413 is a module that cannot be controlled by the user.

According to an exemplary embodiment, the guest OS switch management part 413 operates only necessary virtual machines and turns off the remaining virtual machines in order to efficiently manage the resources in the virtual machines. In other words, only the necessary virtual machines are operated and the unnecessary virtual machines are not operated even in the background so that the resources can be efficiently used.

According to an exemplary embodiment, the OS switch 411 is installed in the guest OS switch management part 413 and switches the input/output control authority when the client hypervisor part 410 selectively operates the user module 420 or the advertisement module 430.

The user module 420 or the advertisement module 430 is assigned the resources of the hardware 405 by the client hypervisor part 410 and operated.

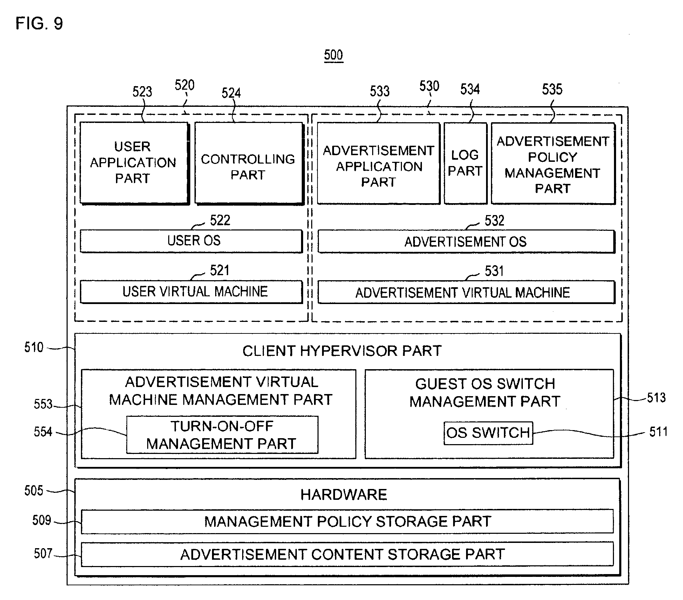

The user module 420 is installed on the client hypervisor part 410 and may include a user virtual machine 421, a user OS 422, a user application part 423, and a controlling part 434. The functions of these elements have been described above with reference to FIGS. 1 to 7 and thus a detailed description thereof is omitted. However, in the embodiments of FIGS. 1 to 7, the controlling part 434 transmits a request for operation of the advertisement module 430 (or the advertisement application) to the client hypervisor part, but, the embodiment of FIG. 8 differs from the above embodiments in that the controlling part 434 transmits such a request to the management module 450 and the management module 450 selects an advertisement module with reference to the advertisement policy, and then the controlling part 434 requests the client hypervisor part to operate the selected advertisement module. This feature of FIG. 8 is realized in the embodiments of FIGS. 9 to 11 as will be described below.

The management module 450 may include a management virtual machine 451, a management OS 452, and an advertisement virtual machine management part 453.

If the user terminal device 400 is turned on, the management module 450 is given the second resource use authority by the client hypervisor part 410 and thus operated in the background of the user terminal device 400. The management module 450 may be always in an on-state in order to manage the advertisement virtual machine 431 and to receive a request for provision of an advertisement from the controlling part 424.

The management virtual machine 451 is a virtual machine to support the operation of the management module 450 and the management OS 452 is an OS to manage the advertisement virtual machine.

The advertisement virtual machine management part 453 establishes an advertisement policy using an advertiser's advertisement policy or data to establish an advertisement policy, which are received from the advertisement management server 70, and provides the advertisement policy to the controlling part 424. The advertisement virtual machine management part 453 may manage the advertisement virtual machine 431 according to the advertisement policy and may request the client hypervisor part 410 to turn on or off the advertisement virtual machine 431.

The controlling part 424 is directly communicable with the advertisement management server 70 and may receive a management policy of the advertisement virtual machine.

According to an exemplary embodiment, in the case that a plurality of advertisement modules 430 are installed, if the advertisement virtual machine management part 453 receives a request for provision of an advertisement from the controlling part 424, the advertisement virtual machine management part 453 determines a target service module from among the plurality of advertisement modules (not shown) by referring to the advertisement policy. Hereinafter, the advertisement module 430 will be explained as the target service module.

A turn-on-off management part 454 installed on the advertisement virtual machine management part 453 may request the client hypervisor part 410 to operate (turn on) the advertisement module 430 to provide an advertisement. The turn-on-off management part 454 may request the client hypervisor part 410 to turn on only the advertisement module 430 and turn off the other advertisement modules (not shown) and the user module or virtual machines other than the advertisement virtual machine 431. Accordingly, the client hypervisor part 410 assigns resources to the advertisement module so that the advertisement module is operated as a main module.

The advertisement module 430 is installed on the client hypervisor part 410 and is a dedicated module only for an advertisement. The advertisement module 430 cannot be executed until it receives an executing command from the advertisement virtual machine management part 453. If the advertisement module 430 is given the input/output control authority by the client hypervisor part 410, the advertisement module 430 is executed and reproduces an advertisement.

In this exemplary embodiment, the advertisement module 430 may include an advertisement virtual machine 431, an advertisement OS 432, an advertisement application part 433, a log part 434, and an advertisement policy management part 435. The advertisement virtual machine 431 is a virtual machine for providing an advertisement, and the advertisement OS 432 is an OS for providing an advertisement and provides an environment in which the advertisement application part 433 for reproducing advertisement contents is operated. The advertisement application part 433 is an application for reproducing advertisement contents and reproduces advertisement contents stored in the advertisement content storage part 407.

The log part 434 records a result of reproducing the advertisement contents by the advertisement application part 433 and information on the reproducing in the form of a log. The result of reproducing is a result of reproducing the advertisement contents and is provided to the advertisement tracking part 73. The information on the reproducing relates to an operation of a service and includes the number of times the advertisement is reproduced. The log part 254 is directly communicable with the advertisement management server 70. In this case, the log part 254 provides the recorded log to the advertisement management server 70.

If the reproducing of the advertisement is completed, the advertisement application part 433 or the advertisement policy management part 435 may ask the user whether he/she wishes to repeat the reproducing of the advertisement. If the user wishes to repeat the reproducing of the advertisement, that is wishes to repeat viewing of the advertisement, the advertisement application part 433 reproduces the advertisement again and the log part 434 records the result of reproducing and the information on the reproducing again.

According to an exemplary embodiment, the advertisement policy management part 435 of FIG. 8 does not establish an advertisement policy unlike the advertisement policy management part of FIG. 7, and instead the advertisement virtual machine management part 453 may establish an advertisement policy. In FIG. 8, the advertisement policy management part 435 may ask the user whether he/she wishes to repeat the reproducing of the advertisement. Also, the advertisement virtual machine management part 453 or the advertisement policy management part 435 may monitor whether the advertisement application part 433 has reproduced the advertisement according to the advertisement policy. If the advertisement policy management part 435 monitors whether the advertisement application part 433 has reproduced the advertisement according to the advertisement policy, the advertisement policy management part 435 transmits a result of monitoring to the advertisement virtual machine management part 453 and the virtual machine management part 453 requests the client hypervisor part 410 to operate the user application part 423.

FIG. 9 is block diagram illustrating a client hypervisor-based terminal device according to still another exemplary embodiment.

Referring to FIG. 9, the embodiment of FIG. 9 differs from the embodiment of FIG. 8 in that a terminal device 500 does not include a separate management module to manage an advertisement module 530 and includes a management module installed in a client hypervisor part 510 to manage an advertisement virtual machine, that is, an advertisement virtual machine management part 553. The user terminal device 500 includes hardware 505, the client hypervisor part 510, a user module 520, and an advertisement module 530. These elements perform the same or similar functions as those of FIG. 8 and thus a detailed description is omitted.

In this exemplary embodiment, the advertisement virtual machine management part 553 may be installed on the client hypervisor part 510 to manage the advertisement virtual machine.

The advertisement virtual machine management part 553 may be requested to provide an advertisement by a controlling part 524 of the user module 520. In this case, the advertisement virtual machine management part 553 may select an advertisement module to provide the advertisement by referring to an advertisement virtual machine management policy. For example, if the advertisement module 530 is selected, a turn-on-off management part 554 may request the client hypervisor part 510 to activate the advertisement module 530 selected by the advertisement virtual machine management part 553. At the request from the turn-on-off management part 554, an OS switch 511 is switched to give an input/output control authority to the advertisement module 530. The embodiment of FIG. 9 is the same as the embodiment of FIG. 8 except for that the advertisement virtual machine management part 553 is installed in the client hypervisor part 510.

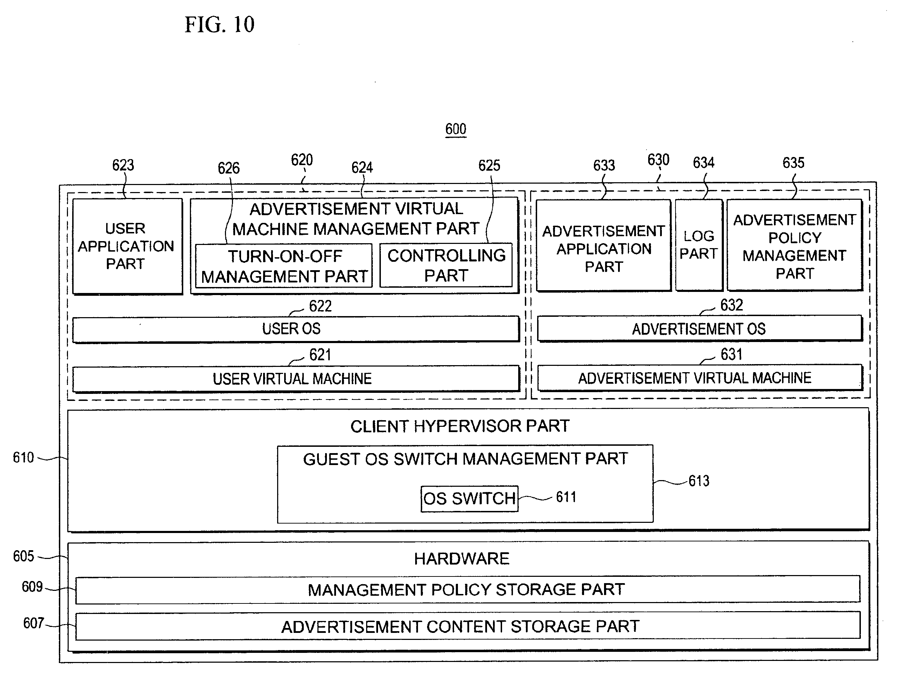

FIG. 10 is a block diagram illustrating a client hypervisor-based terminal device according to another exemplary embodiment.

Referring to FIG. 10, the embodiment of FIG. 10 differs from the embodiment of FIG. 8 in that a terminal device 600 does not include a separate management module to manage an advertisement module 630 and includes an advertisement virtual machine management part 624 installed in a user module 620.

In this exemplary embodiment, the advertisement virtual machine management part 624 may be installed in the user module 620 to manage an advertisement virtual machine.

The advertisement virtual machine management part 624 may be requested to provide an advertisement by a controlling part 625 of the user module 620. In this case, the advertisement virtual machine management part 624 may select an advertisement module to provide an advertisement by referring to an advertisement virtual machine management policy. For example, if the advertisement module 630 is selected, a turn-on-off management part 626 may request a client hypervisor part 610 to activate the advertisement module 630 selected by the advertisement virtual machine management part 624. At the request from the turn-on-off management part 626, an OS switch 611 is switched to give an input/output control authority to the advertisement module 630. The embodiment of FIG. 10 is the same as the embodiment of FIG. 8 except for that the advertisement virtual machine management part 624 is installed in the user module 620.

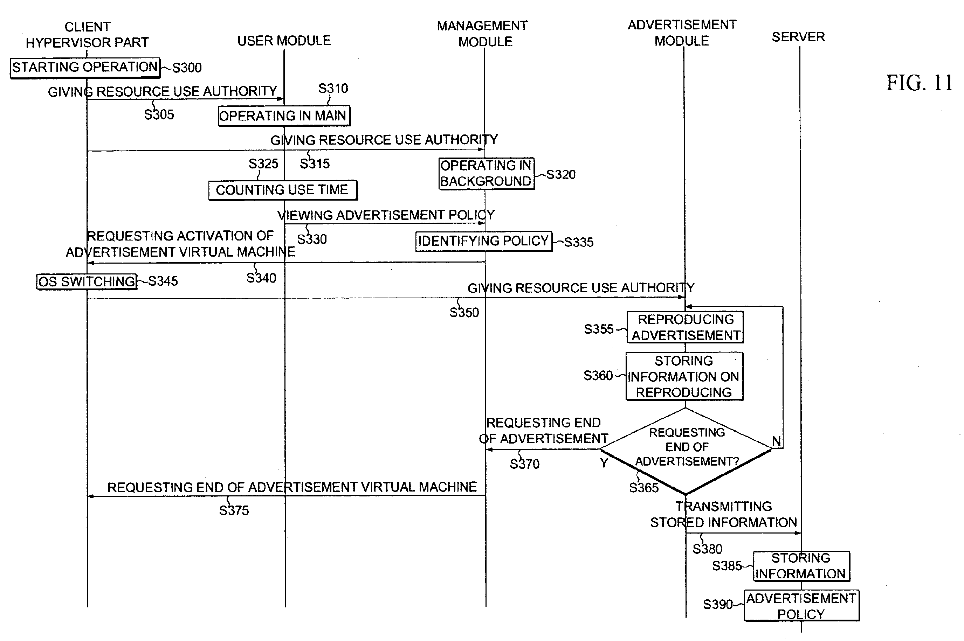

FIG. 11 is a view illustrating an operating method of a client hypervisor-based terminal device according to an exemplary embodiment.

Hereinafter, the operating method of the client hypervisor-based terminal device according to an exemplary embodiment will be explained with reference to the terminal device of FIG. 8. However, it should be understood that the operating method may be achieved by a device other than the terminal device of FIG. 8.

If the user terminal device 400 is turned on, the client hypervisor part 410 starts to be operated (operation S300). Then, the client hypervisor part 410 operates one virtual machine from among a plurality of virtual machines that is pre-set as default, for example, the user virtual machine 421.

The client hypervisor part 410 gives the first resource use authority to the user virtual machine 421 (operation S305).

The user virtual machine 421 given the first resource use authority in operation S305 starts to be operated in a main other than a background and accordingly the user OS 422 also starts to be operated in the main (operation S310). The user application part 423 can be executed if a user selects it. In this embodiment, it is assumed that the user application part 423 is being executed.

The client hypervisor part 410 gives the second resource use authority to the advertisement module 430 (operation S315).

Accordingly, the advertisement module 430 starts to be operated in the background (operation S320).

If the advertisement module 420 starts to be operated, the controlling part 424 of the user module 420 counts a use time of the user application part 423 (operation S325).

If the time during which the user application part 423 is used approaches or reaches a use expiry time set by an advertisement policy, as a result of counting, the controlling part 424 requests the advertisement virtual machine management part 453 of the management module 450 to provide an advertisement (operation S330). In operation S330, even if the time does not approach the use expiry time, the user may frequently request the advertisement virtual machine management part 453 to provide the advertisement.

If the advertisement virtual machine management part 453 is requested to provide the advertisement by the controlling part 424, the advertisement virtual machine management part 453 identifies the advertisement policy and determines a target service module to provide the advertisement from among the plurality of advertisement modules, for example, the advertisement module 430 (operation S335).

The turn-on-off management part 454 installed in the advertisement virtual machine management part 453 may request the client hypervisor part 410 to operate the determined advertisement module 430 (operation S340). At this time, the turn-on-off management part 454 may request the client hypervisor part 411 to turn on only the advertisement module 430 and turn off the other advertisement modules (not shown) and the user module or virtual machines other than the advertisement virtual machine 431.

The OS switch 411 of the client hypervisor part 410 assigns resources to the advertisement module 430 (operation S345) and accordingly the client hypervisor part 410 gives the first resource use authority to the advertisement module 430 (operation S350).

The advertisement module 430 given the first resource use authority is turned on, that is, is activated to reproduce advertisement contents stored in the advertisement content storage part 407 (operation S355). Accordingly, the user can view the advertisement and extend the use time of the user application part 423.

The log part 434 records information on reproducing of the advertisement content reproduced in operation S355 in the form of a log (operation S360). The information on the reproducing may include the number of times the advertisement is reproduced.

If an advertisement end request is input by the user after the reproducing of the advertisement is completed (operation S365), the advertisement policy management part 435 request the advertisement virtual machine management part 453 of the management module 450 to end the reproducing of the advertisement (operation S370).

The turn-on-off management part 454 of the advertisement virtual machine management part 453 may request the client hypervisor part 410 to finish the operation of the advertisement virtual machine 431 (operation S375). In other words, the turn-on-off management part 454 may request the client hypervisor part 410 to turn off the advertisement module 430. Accordingly, the client hypervisor part 410 withdraws the resource use authority given to the advertisement module 430 and activates the user module 420 again.

On the other hand, the log part 434 transmits the recorded information on the reproducing to the advertisement management server (operation S380). The advertisement management server stores the information on the reproducing received in operation S380 (operation S385). The advertisement management server analyzes a degree of interest of viewers on the advertisement or the number of times the viewers view the advertisement, and re-establishes the advertisement policy (operation S390).

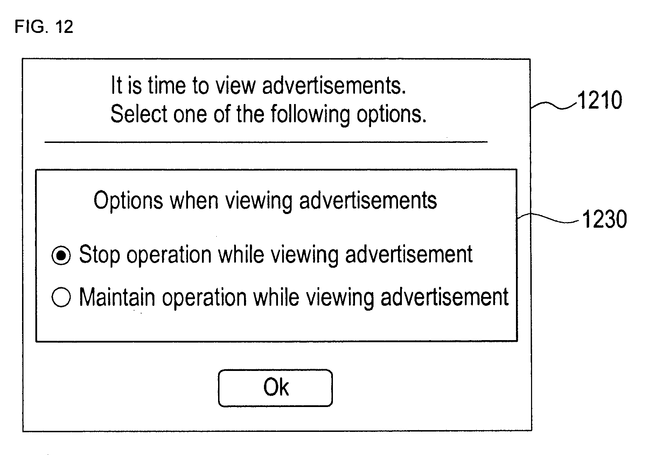

FIG. 12 is a view illustrating an example of an option selection user interface (UI) according to an exemplary embodiment.

Referring to FIG. 12, the controlling part in the above-described embodiments monitors the operation of the user application part and, if it is determined that it is time to operate the advertisement module, the controlling part requests the client hypervisor part or the advertisement virtual machine management part to operate the advertisement module. At this time, the controlling part according to the exemplary embodiments may provide an option selection UI, which is a screen through which the user selects an operation state of the user module (for example, operation stop or operation maintain), and FIG. 12 illustrates an example of such an option selection UI provided by the controlling part.

In this embodiment, an option selection UI 1210 is displayed in the form of a pop-up window. As shown in FIG. 12, the option selection UI 1210 is provided with a menu to select one of "stop operation while viewing advertisement" and "maintain operation while viewing advertisement". In this embodiment, a menu 1230 to select one of the two options using a radio button is illustrated. However, this should not be considered as limiting. Any format can be possible in a designing process that can select one of the two options.

If the user selects "stop operation while viewing advertisement" on the option selection UI 1210, a selection signal to stop the operation of the user module is input and, if the user selects "maintain operation while viewing advertisement", a selection signal to maintain the operation of the user module is input.

If the selection signal to stop the operation is input, the advertisement module starts to be operated and the user module is stopped. The term 'stop' in the present specification indicates a case in which power is not applied to a module and thus the module is completely turned off and also indicates a case in which the module is not turned off but resource allocation is not performed so that an operation performed before is suspended. After that, if the operation of the advertisement module is completed, the user module restarts through a re-booting process or starts to be operated as resource allocation is performed.

On the other hand, if the selection signal to maintain the operation is input, the advertisement module starts to be operated. At this time, the user module proceeds with a current job in the background. In this case, if the operation of the advertisement module is completed, the user module is operated as a main module without any rebooting process.

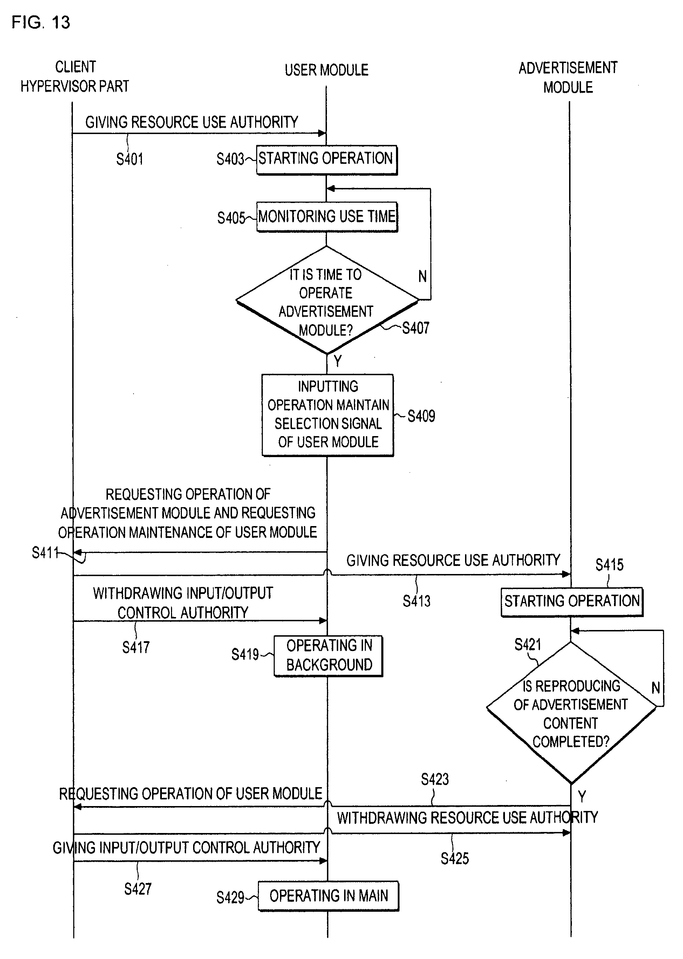

FIG. 13 is a view illustrating an operating method of a client hypervisor-based terminal device which can set a state of a user virtual machine in a background according to an exemplary embodiment.

Hereinafter, the method will be explained with reference to the terminal device of FIG. 4. However, it should be understood that the method can be achieved by a device other than the terminal device of FIG. 4.

If the terminal device 200 is turned on, the client hypervisor part 210 starts to be operated and gives the resource use authority to the user module 220 (operation S401). Accordingly, the user module 220 starts to be operated (operation S403). In other words, the user virtual machine 221 and the user OS 222 are operated.

The user executes the user application part 223 installed on the user OS 222. If the user application part 223 is executed, the controlling part 224 is also executed to monitor a use time of the user application part 223 (operation S405).

If an accumulated use time of the user application part 223 being currently executed reaches a predetermined reference use time, as a result of monitoring by the controlling part 224, that is, if it is determined that it is time to operate the advertisement module 230 (operation S407-Y), the controlling part 224 provides the option selection UI 1210 to guide the user to select one option. The controlling part 224 continues monitoring until the time to operate the advertisement module 230 arrives (operation S407-N).

Accordingly, if the user inputs an operation maintain selection signal of the user module 220 through the option selection UI 1210 (operation S409), the controlling part 224 requests the client hypervisor part 210 to operate the advertisement module 230 and also maintain the operation of the user module 220 (operation S411).

At the request from the controlling part 224, the client hypervisor part 210 gives the resource use authority to the advertisement module 230 (operation S413). Accordingly, the advertisement module 230 starts to be operated. In other words, advertisement contents are reproduced (operation S415).

Also, the client hypervisor part 210 withdraws the input/output control authority of the resource use authority given to the user module 220 (operation S417). Accordingly, the user module 220 is operated in the background (operation S419).

After that, if the reproducing of the advertisement content by the advertisement module 230 is completed (operation S421-Y), the advertisement module 230 requests the client hypervisor part 210 to operate the user module 220 (operation S423).

The client hypervisor part 210 which receives the request from the advertisement module 230 withdraws the resource use authority from the advertisement module 230 (operation S425) and gives the input/output control authority to the user module 220 (operation S427). Accordingly, the operation of the advertisement module 230 is finished and the user module 220 is operated again in the main (operation S429).

In operation S405, if the user application part 223 is executed, the controlling part 224 is also operated. However, even if the user application part 223 is not executed, the controlling part 224 may be executed by the user OS 222. In this case, it is easier for the controlling part 224 to monitor the user application part 223.

The order of operations S413 and S417 may be inverted. Also, although operations S413 and S417 are performed in sequence in the above exemplary embodiment, the two operations may be performed simultaneously.

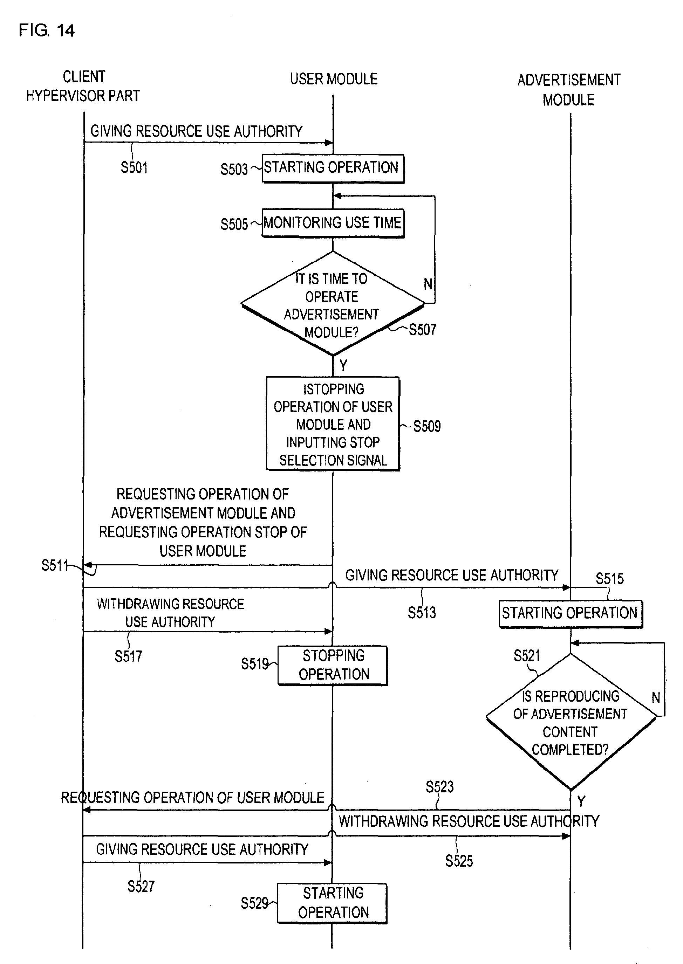

FIG. 14 is a flowchart illustrating an operating method of a terminal device which can set a state of a user virtual machine in a background according to an exemplary embodiment.

Hereinafter, the method will be explained with reference to the terminal device of FIG. 4. However, it should be understood that the method may be achieved by a device other than the terminal device of FIG 4. Operations S501 to 507 are the same as operations 401 to 407 of FIG. 13. Therefore, a detailed description of operations S501 to 507 is omitted.

If the user inputs an operation stop selection signal of the user module 220 through the option selection UI 1210 (operation S509), the controlling part 224 requests the client hypervisor part 210 to operate the advertisement module 230 and simultaneously stop the operation of the user module 220 (operation S511).

The client hypervisor part 210 gives the resource user authority to the advertisement module 230 (operation S513). Accordingly, the advertisement module 230 starts to be operated and reproduces advertisement contents (operation S515).

Also, the client hypervisor part 210 withdraws the resource use authority given to the user module 220 (operation S517). Accordingly, the operation of the user module 220 is stopped (operation S519).

If the reproducing of the advertisement content by the advertisement module 230 is completed (operation S521-Y), the advertisement module 230 requests the client hypervisor part 210 to operate the user module 220 (operation S523).

The client hypervisor part 210 withdraws the resource use authority from the advertisement module 230 (operation S525) and gives the resource use authority back to the user module 220 (operation S527). Accordingly, the user module 220 starts to be operated (operation S529).

Through the above-described procedure, when the advertisement module 130 is operated according to an accumulated use time of the user module 220, the operation of the user module 220 may be controlled to be stopped or maintained according to a user's selection. Accordingly, even if the time to operate the advertisement module 230 arrives while the user module 220 is performing an operation such as data downloading, inconvenience occurring when the operation of the user module 220 is stopped, regardless of user's intention, can be reduced.

The above-described option selection UI 1210 may be provided to the user when a computer is initially turned on or while the user module 220 is being operated. In other words, a time at which the option selection UI 1210 is provided to the user may be changed variously within a range without departing from the spirit of the present invention.

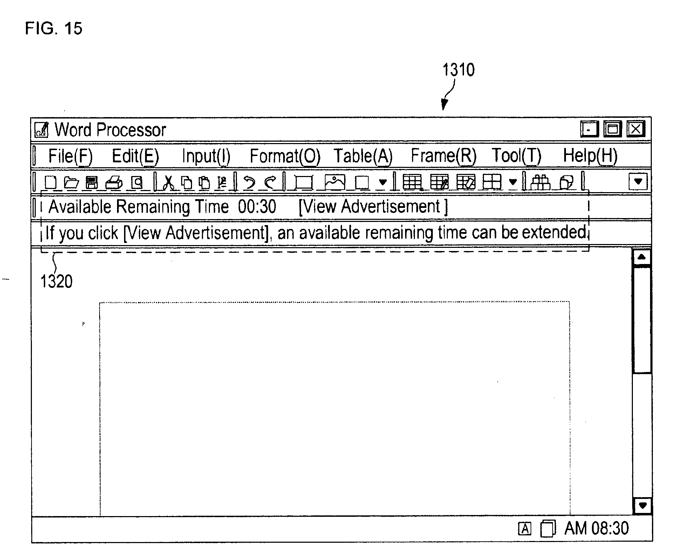

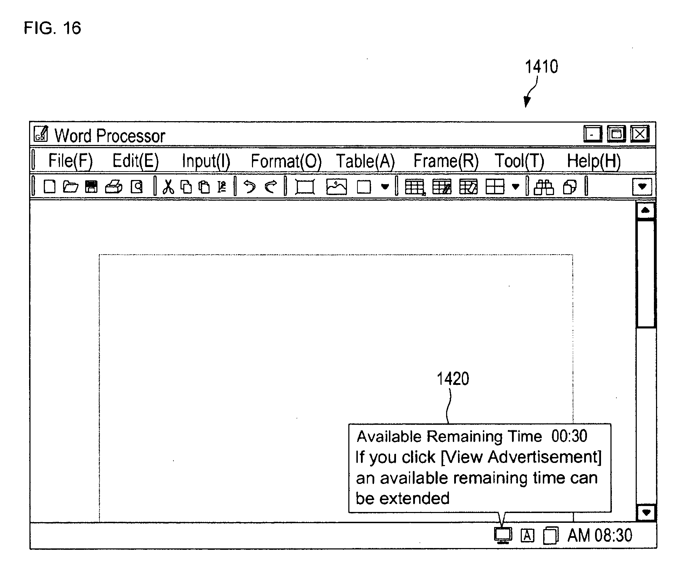

FIGS. 15 and 16 are views illustrating examples of a screen to guide an available remaining time of the user module 220. Hereinafter, an exemplary embodiment will be explained with reference to the terminal device of FIG. 3. It should be understood that the exemplary embodiment is achieved by a device other than the terminal device of FIG. 3.

FIG. 15 is a view illustrating an example of a display screen of the user application part 223. More specifically, FIG. 15 illustrates a display screen 1310 of an application titled "word processor." The display screen 1310 is provided a variety of menus and a variety of buttons. Also, the display screen 1310 further includes a menu 1320 formed on one side and the menu 1220 includes a part of displaying an available remaining time of an user module and a service request button to receive an advertisement service request from a user. If the user clicks "[View Advertisement]," an advertisement view request signal is input to the advertisement module 130.

The menu 1320 to output the available remaining time and receive the advertisement view request signal is displayed in the form shown in FIG. 15 in the case that the controlling part 124 is embedded in the user application part 123, as in the embodiment of FIG. 3.

FIG. 16 illustrates a display screen 1410 of the same application titled "word processor" as in FIG. 15. However, in the display screen 1410, a menu 1420 to output an available remaining time and receive an advertisement view request signal is displayed on a tray icon. In this embodiment, if the user inputs 'Here', the advertisement view request signal is input to the advertisement module 130.

The menu 1420 to output the available remaining time and receive the advertisement view request signal is displayed in the form shown in FIG. 16 in the case that the controlling part 224 is realized by an independent application separately from the user application part 223, as in the embodiment of FIG. 4.

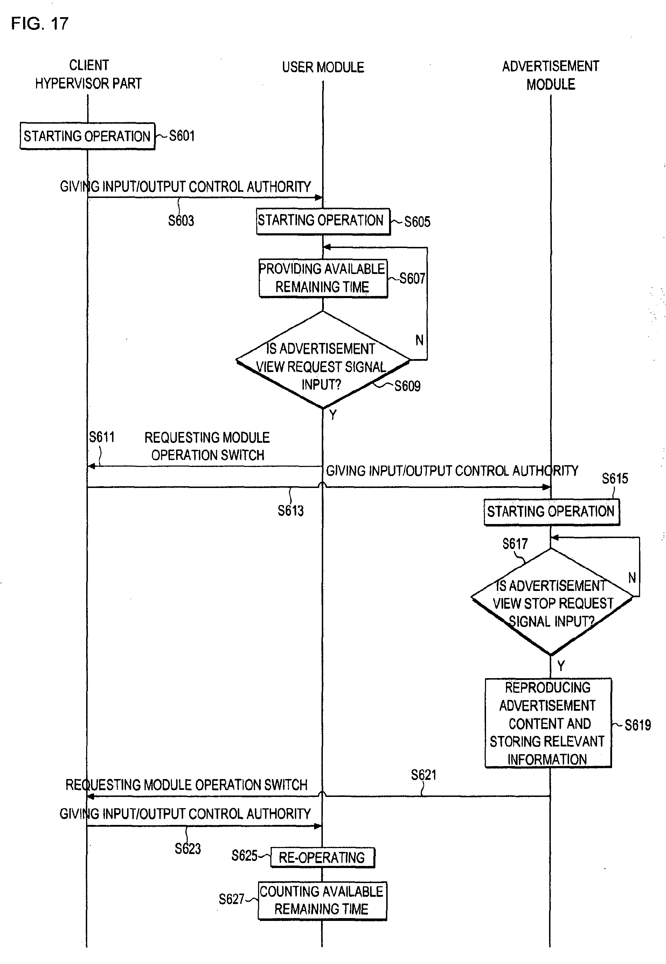

FIG. 17 is a flowchart illustrating a method for advertising according to an exemplary embodiment. Hereinafter, the present exemplary embodiment will be explained with reference to the terminal device of FIG. 3. However, it should be understood that the present exemplary embodiment may be achieved by a device other than the terminal device of FIG. 3.

If the terminal device 100 for an advertisement is turned on, the client hypervisor part 110 starts to be operated (operation S601) and then gives the input/output control authority to the user module 120 through the OS switch 111 l (operation S603). Herein, it is assumed that the client hypervisor part 110 sets default such that the client hypervisor part 110 gives the input/output control authority to the user module 120 when the terminal device 100 is initially operated.

The user module 120 given the input/output control authority by the client hypervisor part 110 starts to be operated (operation S605). In other words, the user OS 122 starts to be operated on the user virtual machine 121 of the user module 120.

After that, if the user selects one certain user application part 123 installed on the user OS 122 and requests it to be executed, the user application part 123 selected by the user starts to be operated and the controlling part 124 associated with the user application part 123 provides an available remaining time of the user module 120, i.e., the user application part 123 (operation S607). The available remaining time may be displayed as shown in FIG. 15 or 16.

The user identifies the available remaining time displayed on the display screen 1310 or 1410 of the user application part 123, and inputs an advertisement view request signal if he/she wishes to extend the use time of the user application part 123 (operation S609).

If the advertisement view request signal is input (operation S609-Y), the user application part 123 requests the client hypervisor part 110 to switch a module operation through the user OS 122 and the user virtual machine 121 (operation S611).

The client hypervisor part 110 requested to switch the module operation by the user module 120 controls the OS switch 111 to give the input/output control authority to the advertisement module 130 (operation S613). More specifically, the OS switch 111 gives the input/output control authority given to the user virtual machine 121 to the advertisement virtual machine 131.

The advertisement module 130 given the input/output control authority by the client hypervisor part 110 starts to be operated (operation S615). More specifically, if the OS switch 111 gives the input/output control authority to the advertisement virtual machine 131, the advertisement virtual machine 131 is executed and the advertisement OS 132 is executed in a virtual environment provided by the advertisement virtual machine 131. The advertisement application part 133 is operated on such an advertisement OS 132. The advertisement content is executed by the advertisement application part 133. Herein, the advertisement content may be embedded in the advertisement application part 133 or stored in the form of a separate file, and may be called by the advertisement application part 133 and executed.

The user may request the advertisement content being reproduced to be stopped. If an advertisement view stop request signal is input through the advertisement application part 133 (operation S617-Y), the log part 134 records information of the reproducing of the advertisement content reproduced up to now in the form of a log (operation S619).

After the information on the reproducing is stored, the advertisement application part 133 requests the client hypervisor part 110 to switch the module operation (operation S621). When the advertisement application part 133 requests the client hypervisor part 110 to switch the module operation, the advertisement application part 133 may also transmit the information on the reproducing of the advertisement content to the user module 120.

The client hypervisor part 110 requested to switch the module operation by the advertisement module 130 controls the OS switch 111 to give the input/output control authority to the user module 120. More specifically, the OS switch 111 gives the input/output control authority currently given to the advertisement virtual machine 131 to the user virtual machine 121 (operation S623). In other words, the input/output control authority is returned to the previous state before the user views the advertisement.

The user module 120 given the input/output control authority by the client hypervisor part 110 starts to be operated again (operation S625) and, as the user module 120 is re-operated, the controlling part 124 counts an available remaining time by reflecting an operating time of the advertisement module 130 based on the information on the reproducing to a previously counted available remaining time (operation S627). By doing this, the available remaining time displayed on the display screen 1310 or 1410 of the user application part 123 in operation S607 is further extended.

In the above exemplary embodiments, the controlling part 224 monitors the use of the application or the use of the virtual machine in which the application is installed. However, these monitoring methods can be substituted with each other. For example, if only the application to be monitored is installed in the virtual machine, either one of methods of monitoring the use of the virtual machine and monitoring the use of the application can be used.

Also, in the above exemplary embodiments, the phrase "monitoring the user module" is used to mean that at least one of elements included in the user module is monitored, for expository purpose.

The above exemplary embodiments include exemplary embodiment i) in which the controlling part monitors the use time of the user application (or the use time of the virtual machine in which the user application is installed), exemplary embodiment ii) in which the controlling part monitors the use time of the user application (or the use time of the virtual machine in which the user application is installed) and the option selection UI is provided for the user to select an operational state of the user module, and exemplary embodiment iii) in which the controlling part monitors the use time of the application (or the use time of the virtual machine in which the user application is installed) and the screen to receive the available time of the user application and the advertisement view request signal is provided. However, these exemplary embodiments can be changed. For example, the controlling part may monitor the use time of the user application (or the use time of the virtual machine in which the user application is installed), provides the screen to receive the available time of the user application and the advertisement view request signal, and the option selection UI screen for the user to select the operation state of the user module.

The term "advertisement reproducing" recited in the above exemplary embodiments includes not only executing an advertisement application but also liking to an advertisement web page, and is not an operation of exposing the user to the advertisement unilaterally and also includes an operation of receiving a certain action from the user (interaction with the user).

In the above exemplary embodiments, elements such as a communication part to communicate between the terminal device and the service have not been mentioned. However, in order to communicate between the terminal device and the server, hardware such as a LAN card and a driver to drive the LAN card may be needed. However, as mentioned at the beginning, the element such as the communication part is well known in the related art is not determined to have a great relation to the present invention. Therefore, in order to prevent an unnecessary confusion in describing the exemplary embodiments, the communication part has not been mentioned. Also, besides the communication part, hardware and software necessary for the operation of the server and the terminal device may be provided. However, they are omitted for ease of understanding. The above-described methods may be realized in the form of a program command that can be executed using a variety of computers and may be recorded on a compute readable medium (e.g., memory, CD-ROM, etc.). The computer readable medium may store a program command, a data file, and a data structure independently or a combination thereof. The program command recorded on the medium may be designed and configured to achieve the exemplary embodiments or may be known to the ordinary skilled person in the computer software field. Alternatively, the program may be embodied in a transmission medium for transmission over a network.

In the client hypervisor-based terminal device for advertising and the operation method thereof according to the exemplary embodiments, if the time for advertising arrives according to the advertiser's advertisement policy while the user uses the terminal device, the advertisement content is automatically reproduced so that the user is not required to perform a separate operation to view the advertisement or identify that the user viewed advertisement. Therefore, user's hostility caused by the advertisement exposure can be solved.

Also, in the client hypervisor-based terminal device for advertising and the operation method thereof according to the exemplary embodiments, since the advertisement virtual machine and advertisement OS are installed on the client hypervisor part separately from the user virtual machine and the user OS, the operation of reproducing the advertisement content does not affect the user virtual machine and the user OS. Therefore, user's inconvenience in using the terminal device is reduced.

Also, in the client hypervisor-based terminal device for advertising and the operation method thereof according to the exemplary embodiments, since the user is not authorized to control the client hypervisor part, it is impossible for the user to delete or manipulate the advertisement system such as the advertisement virtual machine and the advertisement OS. Therefore, a stable advertisement effect can be guaranteed for advertisers.

While exemplary embodiments have been particularly shown and described above, it will be understood by those of ordinary skill in the art that various changes in form and details may be made therein without departing from the scope of the present invention as defined by the following claims.

## Claims

1. An operating method of a client hypervisor-based terminal device (1; 50; 100; 200; 300; 400; 500; 600) including a user module (20; 120; 220; 320; 420; 520; 620) which is operated on a first virtual machine (21; 121; 221; 321; 421; 521; 621) among a plurality of virtual machines operated on a client hypervisor (10; 110; 210; 310; 410; 510; 610) of the client hypervisor-based terminal device, a service module (30; 130; 230; 330; 430; 530; 630) which is operated on a second virtual-machine (31; 131; 231; 331; 431; 531; 631) among the plurality of virtual machines and a controlling part (24; 124; 224; 324; 424; 524; 624) which is operated on one of the first virtual machine and a third virtual machine (326) among the plurality of virtual machines, the operating method comprising:
monitoring (S107; S207), by the controlling part, an operation of the user module;
determining (S109; S209), by the controlling part, whether the operation of the user module coincides with a pre-set policy;
if it is determined that the operation of the user module coincides with the pre-set policy, requesting (S111; S211), by the controlling part, the client hypervisor to stop the user module and to operate the service module; and
stopping the operation of the user module and operating the service module, in response to the request.

2. The operating method as claimed in claim 1, further comprising displaying (S607) on a screen an available time (1320; 1420) of the user module and/or a service request button for a user to request the service provided with the service module.

3. The operating method as claimed in claim 1, further comprising, providing a user interface screen (1210) to select whether the operation of the user module is stopped or operated in a background, in response to stopping the operation of the user module and operating the service module.

4. The operating method as claimed in claim 1, wherein the monitoring comprises one of monitoring an operation of a first application (23; 123; 223; 323; 423; 523; 623) which is included in the user module and is operated on the first virtual machine and monitoring the operation of the first virtual machine.

5. A client hypervisor-based terminal device (1; 50; 100; 200; 300; 400; 500; 600) comprising:
hardware (5; 105; 205; 305; 405; 505; 605);
a client hypervisor part (10; 110; 210; 310; 410; 510; 610) adapted to manage use of the hardware;
a user module (20; 120; 220; 320; 420; 520; 620) operated on a first virtual machine (21; 121; 221; 321; 421; 521; 621) among a plurality of virtual machines operated on the client hypervisor part and adapted to use the hardware under control of the client hypervisor part;
a service module (30; 130; 230; 330; 430; 530; 630) operated on a second virtual machine (21; 121; 221; 321; 421; 521; 621) among a plurality of virtual machines operated on the client hypervisor part and adapted to use the hardware under control of the hypervisor part; and
a controlling part (24; 124; 224; 324; 424; 524; 624) operated on one of the first virtual machine and a third virtual machine (326) among the plurality of virtual machines, the controlling part being adapted to monitor (S107; S207) an operation of the user module and to determine (S109; S209) whether the operation of the user module coincides with a pre-set policy and to request (S111; S211) the client hypervisor part to stop the user module and to operate the service module if it is determined that the operation of the user modules coincides with a pre-set policy,
wherein the client hypervisor part is adapted to operate the service module or the user module based on a request from the controlling part.

6. The client hypervisor-based terminal device as claimed in claim 5, further comprising a management module (340) installed on the client hypervisor part and adapted to use the hardware under control of the client hypervisor part, wherein the controlling part is included in the management module.

7. The client hypervisor-based terminal device as claimed in claim 5, further comprising a virtual machine management part (453) adapted to receive a result of the monitoring by the controlling part, wherein the service module comprises a plurality of service modules, and wherein the virtual machine management part is further adapted to select a service module to be operated from among the plurality of service modules, and to transmit a request for an operation of the selected service module to the client hypervisor part.

8. The client hypervisor-based terminal device as claimed in claim 7, wherein the virtual machine management part is included in one of a management module installed on the client hypervisor part that is adapted to use the hardware under control of the client hypervisor part, the user module, or the client hypervisor part.

9. The client hypervisor-based terminal device as claimed in claim 5, wherein, if the controlling part determines that the operation of the user module is to be stopped and the service module is to be operated, the controlling part is further adapted to provide a user interface screen (1210) to select whether the operation of the user module is to be stopped or operated in a background.

10. The client hypervisor-based terminal device as claimed in claim 5, wherein the user module is adapted to display an available time (1320; 1420) of the user module and/or a service request button for requesting of the service provided with the service module from the user on a screen.

11. The client hypervisor-based terminal device of claim 5, wherein the hardware comprises at least one central processing unit, CPU, and a storage unit, wherein the user module includes a first application (23; 123; 223; 323; 423; 523; 623) which is operated on the first virtual machine and wherein the service modules includes a second application (33; 133; 233; 333; 433; 533; 633) which is operated on the second virtual machine.

12. The client hypervisor-based terminal device according to claim 11, wherein the first virtual machine is adapted to execute a first operating system and the second virtual machine is adapted to execute a second operating system.

## Patentansprüche

1. Betriebsverfahren für ein Client-Hypervisor-basiertes Endgerät (1; 50; 100; 200; 300; 400; 500; 600) mit einem Benutzermodul (20; 120; 220; 320; 420; 520; 620), das auf einer ersten virtuellen Maschine (21; 121; 221; 321; 421; 521; 621) aus einer Vielzahl von virtuellen Maschinen betrieben wird, die auf einem Client-Hypervisor (10; 110; 210; 310; 410; 510; 610) des Client-Hypervisor-basierten Endgeräts betrieben werden, einem Dienstmodul (30; 130; 230; 330; 430; 530; 630), das auf einer zweiten virtuellen Maschine (31; 131; 231; 331; 431; 531; 631) aus der Vielzahl von virtuellen Maschinen betrieben wird, und einem Steuerteil (24; 124; 224; 324; 424; 524; 624), der auf der ersten virtuellen Maschine oder einer dritten virtuellen Maschine (326) aus der Vielzahl von virtuellen Maschinen betrieben wird, wobei das Betriebsverfahren umfasst:
Überwachen (S107; S207) eines Betriebs des Benutzermoduls durch den Steuerteil;
Bestimmen (S109; S209), ob der Betrieb des Benutzermoduls mit einer vorgegebenen Richtlinie übereinstimmt, durch den Steuerteil;
wenn bestimmt wird, dass der Betrieb des Benutzermoduls mit der vorgegebenen Richtlinie übereinstimmt, Anfordern (S111; S211) durch den Steuerteil, dass der Client-Hypervisor das Benutzermodul anhält und das Dienstmodul betreibt; und
Anhalten des Betriebs des Benutzermoduls und Betreiben des Dienstmoduls in Reaktion auf die Anforderung.

2. Betriebsverfahren nach Anspruch 1, des Weiteren umfassend das Anzeigen (S607) auf einem Bildschirm einer verfügbaren Zeit (1320; 1420) des Benutzermoduls und/oder einer Dienstanforderungsschaltfläche, damit ein Benutzer den auf dem Dienstmodul bereitgestellten Dienst anfordern kann.

3. Betriebsverfahren nach Anspruch 1, des Weiteren umfassend das Bereitstellen eines Benutzeroberflächenbildschirms (1210) zum Auswählen, ob der Betrieb des Benutzermoduls angehalten oder im Hintergrund ausgeführt werden soll, in Reaktion auf das Anhalten des Betriebs des Benutzermoduls und das Betreiben des Dienstmoduls.

4. Betriebsverfahren nach Anspruch 1, wobei das Überwachen entweder das Überwachen eines Betriebs einer ersten Anwendung (23; 123; 223; 323; 423; 523; 623), die in dem Benutzermodul enthalten ist und auf der ersten virtuellen Maschine ausgeführt wird, oder das Überwachen des Betriebs der ersten virtuellen Maschine umfasst.

5. Client-Hypervisor-basiertes Endgerät (1; 50; 100; 200; 300; 400; 500; 600), das umfasst:
Hardware (5; 105; 205; 305; 405; 505; 605);
einen Client-Hypervisor-Teil (10; 110; 210; 310; 410; 510; 610), der zur Verwaltung der Hardware-Nutzung eingerichtet ist;
ein Benutzermodul (20; 120; 220; 320; 420; 520; 620), das auf einer ersten virtuellen Maschine (21; 121; 221; 321; 421; 521; 621) aus einer Vielzahl von virtuellen Maschinen, die auf dem Client-Hypervisor-Teil betrieben werden, betrieben wird und dazu eingerichtet ist, die Hardware unter der Steuerung des Client-Hypervisor-Teils zu nutzen;
ein Dienstmodul (30; 130; 230; 330; 430; 530; 630), das auf einer zweiten virtuellen Maschine (21; 121; 221; 321; 421; 521; 621) aus einer Vielzahl von virtuellen Maschinen, die auf dem Client-Hypervisor-Teil betrieben werden, betrieben wird und dazu eingerichtet ist, die Hardware unter der Steuerung des Hypervisor-Teils zu nutzen; und
einen Steuerteil (24; 124; 224; 324; 424; 524; 624), der auf der ersten virtuellen Maschine oder einer dritten virtuellen Maschine (326) aus der Vielzahl von virtuellen Maschinen betrieben wird, wobei der Steuerteil dazu eingerichtet ist, einen Betrieb des Benutzermoduls zu überwachen (S107; S207) und zu bestimmen (S109; S209), ob der Betrieb des Benutzermoduls mit einer vorgegebenen Richtlinie übereinstimmt und den Client-Hypervisor-Teil dazu aufzufordern (S111; S211), das Benutzermodul anzuhalten und das Dienstmodul zu betreiben, wenn bestimmt wird, dass der Betrieb des Benutzermoduls mit einer vorgegebenen Richtlinie übereinstimmt,
wobei der Client-Hypervisor-Teil dazu eingerichtet ist, basierend auf einer Aufforderung von dem Steuerteil das Dienstmodul oder das Benutzermodul zu betreiben.

6. Client-Hypervisor-basiertes Endgerät nach Anspruch 5, des Weiteren umfassend ein Verwaltungsmodul (340), das auf dem Client-Hypervisor-Teil installiert und dazu eingerichtet ist, die Hardware unter Steuerung des Client-Hypervisor-Teils zu nutzen, wobei der Steuerteil in dem Verwaltungsmodul enthalten ist.

7. Client-Hypervisor-basiertes Endgerät nach Anspruch 5, des Weiteren umfassend einen Verwaltungsteil für die virtuellen Maschinen (453), der dazu eingerichtet ist, ein Überwachungsergebnis von dem Steuerteil zu empfangen, wobei das Dienstmodul eine Vielzahl von Dienstmodulen umfasst und wobei der Verwaltungsteil für die virtuellen Maschinen des Weiteren dazu eingerichtet ist, ein zu betreibendes Dienstmodul aus der Vielzahl von Dienstmodulen auszuwählen und eine Aufforderung zum Betrieb des ausgewählten Dienstmoduls an den Client-Hypervisor-Teil zu senden.

8. Client-Hypervisor-basiertes Endgerät nach Anspruch 7, wobei der Verwaltungsteil für die virtuellen Maschinen entweder in einem Verwaltungsmodul, das auf dem Client-Hypervisor-Teil installiert und dazu eingerichtet ist, die Hardware unter Steuerung des Client-Hypervisor-Teils zu nutzen, dem Benutzermodul oder dem Client-Hypervisor-Teil enthalten ist.

9. Client-Hypervisor-basiertes Endgerät nach Anspruch 5, wobei, wenn der Steuerteil bestimmt, dass der Betrieb des Benutzermoduls angehalten und das Dienstmodul betrieben werden soll, der Steuerteil des Weiteren dazu eingerichtet ist, einen Benutzeroberflächenbildschirm (1210) zur Auswahl bereitzustellen, ob der Betreib des Benutzermoduls angehalten oder in einem Hintergrund ausgeführt werden soll.

10. Client-Hypervisor-basiertes Endgerät nach Anspruch 5, wobei das Benutzermodul dazu eingerichtet ist, eine verfügbare Zeit (1320; 1420) des Benutzermoduls und/oder einer Dienstanforderungsschaltfläche zur Anforderung des mit dem Dienstmodul angebotenen Dienstes durch den Benutzer auf einem Bildschirm anzuzeigen.

11. Client-Hypervisor-basiertes Endgerät nach Anspruch 5, wobei die Hardware mindestens eine Zentraleinheit, CPU und eine Speichereinheit umfasst, wobei das Benutzermodul eine erste Anwendung (23; 123; 223; 323; 423; 523; 623) beinhaltet, die auf der ersten virtuellen Maschine ausgeführt wird und wobei die Dienstmodule eine zweite Anwendung (33; 133; 233; 333; 433; 533; 633) aufweisen, die auf der zweiten virtuellen Maschine ausgeführt wird.

12. Client-Hypervisor-basiertes Endgerät nach Anspruch 11, wobei die erste virtuelle Maschine dazu eingerichtet ist, ein erstes Betriebssystem auszuführen und die zweite virtuelle Maschine dazu eingerichtet ist, ein zweites Betriebssystem auszuführen.

## Revendications

1. Procédé de fonctionnement d'un dispositif terminal à base d'hyperviseur client (1; 50; 100; 200; 300; 400; 500; 600) incluant un module d'utilisateur (20; 120; 220; 320; 420; 520; 620) que l'on fait fonctionner sur une première machine virtuelle (21; 121; 221; 321; 421; 521; 621) parmi une pluralité de machines virtuelles que l'on fait fonctionner sur un hyperviseur client (10; 110; 210; 310; 410; 510; 610) du dispositif terminal à base d'hyperviseur client, un module de service (30; 130; 230; 330; 430; 530; 630) que l'on fait fonctionner sur une seconde machine virtuelle (31; 131; 231; 331; 431; 531; 631) parmi la pluralité de machines virtuelles et une partie de commande (24; 124; 224; 324; 424; 524; 624) que l'on fait fonctionner sur une machine parmi la première machine virtuelle et une troisième machine virtuelle (326) parmi la pluralité de machines virtuelles, le procédé de fonctionnement comprenant :
la surveillance (S107; S207) par la partie de commande du fonctionnement du module d'utilisateur ;
la détermination (S109; S209) par la partie de commande du fait que le fonctionnement du module d'utilisateur coïncide avec une politique prédéterminée ;
si l'on a déterminé que le fonctionnement du module d'utilisateur coïncide avec la politique prédéterminée, la demande (S111; S211) par la partie de commande, à l'hyperviseur client, d'arrêter le module d'utilisateur et de faire fonctionner le module de service ; et
l'arrêt du fonctionnement du module d'utilisateur et la mise en fonctionnement du module de service, en réponse à la demande.

2. Procédé de fonctionnement selon la revendication 1, comprenant en outre l'affichage (S607) sur un écran du temps disponible (1320; 1420) du module d'utilisateur et/ou d'un bouton de demande de service pour qu'un utilisateur demande le service fourni avec le module de service.

3. Procédé de fonctionnement selon la revendication 1, comprenant en outre la fourniture d'un écran d'interface d'utilisateur (1210) pour choisir si le fonctionnement du module d'utilisateur est arrêté ou exécuté en arrière-plan, en réponse à l'arrêt du fonctionnement du module d'utilisateur et la mise en fonctionnement du module de service.

4. Procédé de fonctionnement selon la revendication 1, dans lequel la surveillance comprend une surveillance parmi la surveillance du fonctionnement d'une première application (23; 123; 223; 323; 423; 523; 623) qui est incluse dans le module d'utilisateur et que l'on fait fonctionner sur la première machine virtuelle et la surveillance du fonctionnement de la première machine virtuelle.

5. Dispositif terminal à base d'hyperviseur client (1; 50; 100; 200; 300; 400; 500; 600) comprenant :
des circuits (5; 105; 205; 305; 405; 505; 605) ;
une partie d'hyperviseur client (10; 110; 210; 310; 410; 510; 610) adaptée à gérer l'utilisation des circuits ;
un module d'utilisateur (20; 120; 220; 320; 420; 520; 620) que l'on fait fonctionner sur une première machine virtuelle (21; 121; 221; 321; 421; 521; 621) parmi une pluralité de machines virtuelles que l'on fait fonctionner sur la partie d'hyperviseur client et adapté à utiliser les circuits sous le contrôle de la partie d'hyperviseur client ;
un module de service (30; 130; 230; 330; 430; 530; 630) que l'on fait fonctionner sur une seconde machine virtuelle (21; 121; 221; 321; 421; 521; 621) parmi une pluralité de machines virtuelles que l'on fait fonctionner sur la partie d'hyperviseur client et adapté à utiliser les circuits sous le contrôle de la partie d'hyperviseur ; et
une partie de commande (24; 124; 224; 324; 424; 524; 624) que l'on fait fonctionner sur une machine parmi la première machine virtuelle et une troisième machine virtuelle (326) parmi la pluralité de machines virtuelles, la partie de commande étant adaptée à surveiller (S107; S207) le fonctionnement du module d'utilisateur et à déterminer (S109; S209) si le fonctionnement du module d'utilisateur coïncide avec une politique prédéterminée, et à demander (S111; S211) à la partie d'hyperviseur client d'arrêter le module d'utilisateur et de faire fonctionner le module de service si l'on a déterminé que le fonctionnement des modules d'utilisateur coïncide avec une politique fixée à l'avance,
dans lequel la partie d'hyperviseur client est adaptée à faire fonctionner le module de service ou le module d'utilisateur en se basant sur une demande de la partie de commande.

6. Dispositif terminal à base d'hyperviseur client selon la revendication 5, comprenant en outre un module de gestion (340) installé sur la partie d'hyperviseur client et adapté à utiliser les circuits sous le contrôle de la partie d'hyperviseur client, dans lequel la partie de commande est incluse dans le module de gestion.

7. Dispositif terminal à base d'hyperviseur client selon la revendication 5, comprenant en outre une partie de gestion de machine virtuelle (453) adaptée à recevoir un résultat de la surveillance par la partie de commande, dans lequel le module de service comprend une pluralité de modules de services, et dans lequel la partie de gestion de machine virtuelle est adaptée en outre à choisir un module de service destiné à être mis en fonctionnement parmi la pluralité de modules de service, et à transmettre à la partie d'hyperviseur client une demande pour la mise en fonctionnement du module de service choisi.

8. Dispositif terminal à base d'hyperviseur client selon la revendication 7, dans lequel la partie de gestion de machine virtuelle est incluse dans un élément parmi un module de gestion installé sur la partie d'hyperviseur client qui est adapté à utiliser les circuits sous le contrôle de la partie d'hyperviseur client, le module d'utilisateur ou la partie d'hyperviseur client.

9. Dispositif terminal à base d'hyperviseur client selon la revendication 5, dans lequel, si la partie de commande détermine que le fonctionnement du module d'utilisateur doit être arrêté et que le module de
service doit être mis en fonctionnement, la partie de commande est adaptée en outre à fournir un écran d'interface d'utilisateur (1210) pour choisir si le fonctionnement du module d'utilisateur doit être arrêté ou effectué en arrière-plan.

10. Dispositif terminal à base d'hyperviseur client selon la revendication 5, dans lequel le module d'utilisateur est adapté à afficher le temps disponible (1320; 1420) du module d'utilisateur et/ou un bouton de demande de service pour demander le service fourni avec le module de service de l'utilisateur sur un écran.

11. Dispositif terminal à base d'hyperviseur client selon la revendication 5, dans lequel les circuits comprennent au moins une unité centrale de traitement, CPU, et une unité de mémorisation, dans lequel le module d'utilisateur comporte une première application (23; 123; 223; 323; 423; 523; 623) que l'on fait fonctionner sur la première machine virtuelle et dans lequel le module de service comporte une seconde application (33; 133; 233; 333; 433; 533; 633) que l'on fait fonctionner sur la seconde machine virtuelle.

12. Dispositif terminal à base d'hyperviseur client selon la revendication 11, dans lequel la première machine virtuelle est adaptée à exécuter un premier système d'exploitation et la seconde machine virtuelle est adaptée à exécuter un second système d'exploitation.
